# EUROPEAN PATENT APPLICATION

(11) **EP 4 446 783 A1**
(43) Date of publication of application: **16.10.2024**
(21) Application number: 24169954.5
(22) Date of filing: 12.04.2024
(51) Int. Cl.: G01V 1/46, G01V 1/48, E21B 49/10

(54) **FIELD OPERATIONS FRAMEWORK**

(30) Priority: 13.04.2023 US 202363459106 P
(71) Applicant: Services Pétroliers Schlumberger, 75007 Paris (FR); GeoQuest Systems B.V., 2586 BJ The Hague (NL)
(72) Inventor: SAUMYA, Sachit, Clamart (FR); MOHAMED, Ramy Ahmed, Houston (US); AL-JABER, Abdurraouf, Dhahran (SA); ABDALLAH, Wael, Sugar Land (US)
(74) Representative: Schlumberger Intellectual Property Department

(57) **Abstract**

A method can include receiving petrophysics data acquired along a borehole in a subsurface region; generating test location recommendations along the borehole using the petrophysics data as input to a machine learning model; and outputting, based on the test location recommendations, selected locations for performing tests using a downhole tool disposed in the borehole

## Description

### CROSS-RERERENCE TO RELATED APPLICATION(S)

The present disclosure claims priority from U.S. Prov. Appl. No. 63/459106, filed on 13 April 2023, herein incorporated by reference in its entirety.

### BACKGROUND

A reservoir can be a subsurface formation that can be characterized at least in part by its porosity and fluid permeability. As an example, a reservoir may be part of a basin such as a sedimentary basin. A basin can be a depression (e.g., caused by plate tectonic activity, subsidence, etc.) in which sediments accumulate. As an example, where hydrocarbon source rocks occur in combination with appropriate depth and duration of burial, a petroleum system may develop within a basin, which may form a reservoir that includes hydrocarbon fluids (e.g., oil, gas, etc.). Various operations may be performed in the field to access such hydrocarbon fluids and/or produce such hydrocarbon fluids. For example, consider equipment operations where equipment may be controlled to perform one or more operations. In such an example, control may be based at least in part on characteristics of rock where drilling into such rock forms a borehole that can be completed to form a well to produce from a reservoir and/or to inject fluid into a reservoir. While hydrocarbon fluid reservoirs are mentioned as an example, a reservoir that includes water and brine may be assessed, for example, for one or more purposes such as, for example, carbon storage (e.g., sequestration), water production or storage, geothermal production or storage, metallic extraction from brine, etc.

### SUMMARY

A method can include receiving petrophysics data acquired along a borehole in a subsurface region; generating test location recommendations along the borehole using the petrophysics data as input to a machine learning model; and outputting, based on the test location recommendations, selected locations for performing tests using a downhole tool disposed in the borehole. A system can include one or more processors; memory accessible to at least one of the one or more processors; processor-executable instructions stored in the memory and executable to instruct the system to: receive petrophysics data acquired along a borehole in a subsurface region; generate test location recommendations along the borehole using the petrophysics data as input to a machine learning model; and output, based on the test location recommendations, selected locations for performing tests using a downhole tool disposed in the borehole. One or more computer-readable storage media can include processor-executable instructions to instruct a computing system to: receive petrophysics data acquired along a borehole in a subsurface region; generate test location recommendations along the borehole using the petrophysics data as input to a machine learning model; and output, based on the test location recommendations, selected locations for performing tests using a downhole tool disposed in the borehole. Various other apparatuses, systems, methods, etc., are also disclosed.

This summary is provided to introduce a selection of concepts that are further described below in the detailed description. This summary is not intended to identify key or essential features of the claimed subject matter, nor is it intended to be used as an aid in limiting the scope of the claimed subject matter.

### BRIEF DESCRIPTION OF THE DRAWINGS

Features and advantages of the described implementations can be more readily understood by reference to the following description taken in conjunction with the accompanying drawings.
Fig. 1 illustrates an example system that includes various framework components associated with one or more geologic environments;
Fig. 2 illustrates an example of a system;
Fig. 3 illustrates an example of a drilling equipment and examples of borehole shapes;
Fig. 4 illustrates an example of a system;
Fig. 5 illustrates an example of a downhole tool;
Fig. 6 illustrates an example of a downhole tool;
Fig. 7 illustrates an example of a system;
Fig. 8 illustrates an example of a graphical user interface (GUI);
Fig. 9 illustrates an example of a method and an example of a system; and
Fig. 10 illustrates examples of computer and network equipment.

### DETAILED DESCRIPTION

This description is not to be taken in a limiting sense, but rather is made merely for the purpose of describing the general principles of the implementations. The scope of the described implementations should be ascertained with reference to the issued claims.

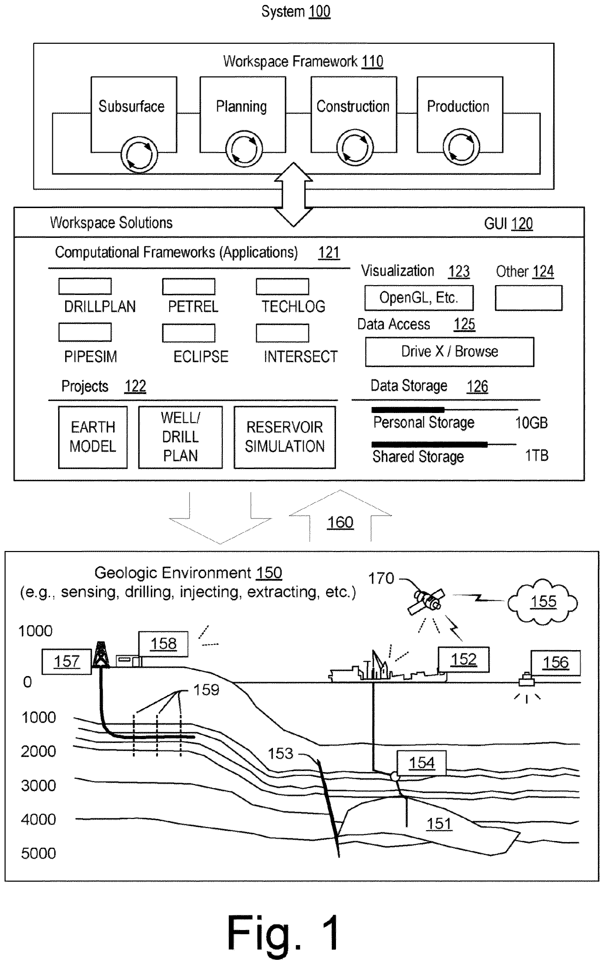

Fig. 1 shows an example of a system 100 that includes a workspace framework 110 that can provide for instantiation of, rendering of, interactions with, etc., a graphical user interface (GUI) 120. In the example of Fig. 1, the GUI 120 can include graphical controls for computational frameworks (e.g., applications) 121, projects 122, visualization 123, one or more other features 124, data access 125, and data storage 126.

In the example of Fig. 1, the workspace framework 110 may be tailored to a particular geologic environment such as an example geologic environment 150. For example, the geologic environment 150 may include layers (e.g., stratification) that include a reservoir 151 and that may be intersected by a fault 153. A geologic environment 150 may be outfitted with a variety of sensors, detectors, actuators, etc. In such an environment, various types of equipment such as, for example, equipment 152 may include communication circuitry to receive and to transmit information, optionally with respect to one or more networks 155. Such information may include information associated with downhole equipment 154, which may be equipment to acquire information, to assist with resource recovery, etc. Other equipment 156 may be located remote from a wellsite and include sensing, detecting, emitting, or other circuitry. Such equipment may include storage and communication circuitry to store and to communicate data, instructions, etc. One or more satellites may be provided for purposes of communications, data acquisition, etc. For example, Fig. 1 shows a satellite 170 in communication with the network 155 that may be configured for communications, noting that the satellite may additionally or alternatively include circuitry for imagery (e.g., spatial, spectral, temporal, radiometric, etc.).

Fig. 1 also shows the geologic environment 150 as optionally including equipment 157 and 158 associated with a well that includes a substantially horizontal portion that may intersect with one or more fractures 159. For example, consider a well in a formation that may include natural fractures, artificial fractures (e.g., hydraulic fractures) or a combination of natural and artificial fractures. As an example, a well may be drilled for a reservoir that is laterally extensive. In such an example, lateral variations in properties, stresses, etc., may exist where an assessment of such variations may assist with planning, operations, etc., to develop a laterally extensive reservoir (e.g., via fracturing, injecting, extracting, etc.). As an example, the equipment 157 and/or 158 may include components, a system, systems, etc. for fracturing, seismic sensing, analysis of seismic data, assessment of one or more fractures, etc.

In the example of Fig. 1, the GUI 120 shows some examples of computational frameworks, including the DRILLPLAN, PETREL, TECHLOG, PETROMOD, ECLIPSE, and INTERSECT frameworks (SLB, Houston, Texas).

The DRILLPLAN framework provides for digital well construction planning and includes features for automation of repetitive tasks and validation workflows, enabling improved quality drilling programs (e.g., digital drilling plans, etc.) to be produced quickly with assured coherency.

The PETREL framework can be part of the DELFI cognitive exploration and production (E&P) environment (SLB, Houston, Texas, referred to as the DELFI environment) for utilization in geosciences and geoengineering, for example, to analyze subsurface data from exploration to production of fluid from a reservoir.

One or more types of frameworks may be implemented within or in a manner operatively coupled to the DELFI environment, which is a secure, cognitive, cloud-based collaborative environment that integrates data and workflows with digital technologies, such as artificial intelligence (Al) and machine learning (ML). Such an environment can provide for operations that involve one or more frameworks. The DELFI environment may be referred to as the DELFI framework, which may be a framework of frameworks. The DELFI environment can include various other frameworks, which may operate using one or more types of models (e.g., simulation models, etc.).

The TECHLOG framework can handle and process field and laboratory data for a variety of geologic environments (e.g., deepwater exploration, shale, etc.). The TECHLOG framework can structure wellbore data for analyses, planning, etc.

The PIPESIM simulator includes solvers that may provide simulation results such as, for example, multiphase flow results (e.g., from a reservoir to a wellhead and beyond, etc.), flowline and surface facility performance, etc. The PIPESIM simulator may be integrated, for example, with the AVOCET production operations framework (SLB, Houston Texas). The PIPESIM simulator may be an optimizer that can optimize one or more operational scenarios at least in part via simulation of physical phenomena.

The ECLIPSE framework provides a reservoir simulator with numerical solvers for prediction of dynamic behavior for various types of reservoirs and development schemes.

The INTERSECT framework provides a high-resolution reservoir simulator for simulation of geological features and quantification of uncertainties, for example, by creating production scenarios and, with the integration of precise models of the surface facilities and field operations, the INTERSECT framework can produce results, which may be continuously updated by real-time data exchanges (e.g., from one or more types of data acquisition equipment in the field that can acquire data during one or more types of field operations, etc.). The INTERSECT framework can provide completion configurations for complex wells where such configurations can be built in the field, can provide detailed chemical-enhanced-oil-recovery (EOR) formulations where such formulations can be implemented in the field, can analyze application of steam injection and other thermal EOR techniques for implementation in the field, advanced production controls in terms of reservoir coupling and flexible field management, and flexibility to script customized solutions for improved modeling and field management control. The INTERSECT framework, as with the other example frameworks, may be utilized as part of the DELFI environment, for example, for rapid simulation of multiple concurrent cases.

The aforementioned DELFI environment provides various features for workflows as to subsurface analysis, planning, construction and production, for example, as illustrated in the workspace framework 110. As shown in Fig. 1, outputs from the workspace framework 110 can be utilized for directing, controlling, etc., one or more processes in the geologic environment 150, and feedback 160 can be received via one or more interfaces in one or more forms (e.g., acquired data as to operational conditions, equipment conditions, environment conditions, etc.).

In the example of Fig. 1, the visualization features 123 may be implemented via the workspace framework 110, for example, to perform tasks as associated with one or more of subsurface regions, planning operations, constructing wells and/or surface fluid networks, and producing from a reservoir.

Visualization features may provide for visualization of various earth models, properties, etc., in one or more dimensions. As an example, visualization features may include one or more control features for control of equipment, which can include, for example, field equipment that can perform one or more field operations. A workflow may utilize one or more frameworks to generate information that can be utilized to control one or more types of field equipment (e.g., drilling equipment, wireline equipment, fracturing equipment, etc.).

As to a reservoir model that may be suitable for utilization by a simulator, consider acquisition of seismic data as acquired via reflection seismology, which finds use in geophysics, for example, to estimate properties of subsurface formations. Seismic data may be processed and interpreted, for example, to understand better composition, fluid content, extent and geometry of subsurface rocks. Such interpretation results can be utilized to plan, simulate, perform, etc., one or more operations for production of fluid from a reservoir (e.g., reservoir rock, etc.). Field acquisition equipment may be utilized to acquire seismic data, which may be in the form of traces where a trace can include values organized with respect to time and/or depth (e.g., consider 1D, 2D, 3D or 4D seismic data).

A model may be a simulated version of a geologic environment where a simulator may include features for simulating physical phenomena in a geologic environment based at least in part on a model or models. A simulator, such as a reservoir simulator, can simulate fluid flow in a geologic environment based at least in part on a model that can be generated via a framework that receives seismic data. A simulator can be a computerized system (e.g., a computing system) that can execute instructions using one or more processors to solve a system of equations that describe physical phenomena subject to various constraints. While several simulators are illustrated in the example of Fig. 1, one or more other simulators may be utilized, additionally or alternatively.

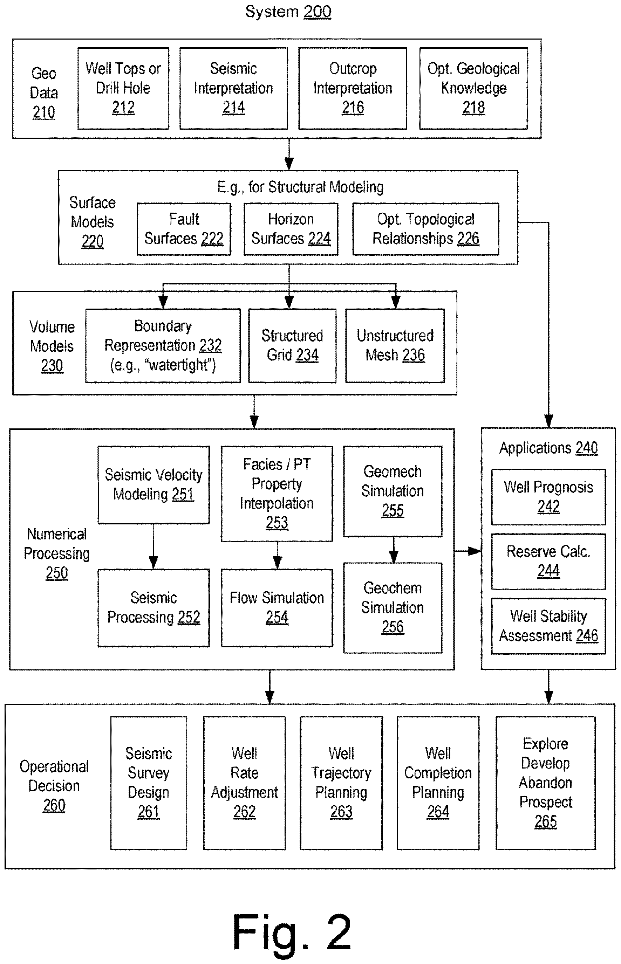

Fig. 2 shows an example of a system 200 that can be operatively coupled to one or more databases, data streams, etc. For example, one or more pieces of field equipment, laboratory equipment, computing equipment (e.g., local and/or remote), etc., can provide and/or generate data that may be utilized in the system 200.

As shown, the system 200 can include a geological/geophysical data block 210, a surface models block 220 (e.g., for one or more structural models), a volume modules block 230, an applications block 240, a numerical processing block 250 and an operational decision block 260. As shown in the example of Fig. 2, the geological/geophysical data block 210 can include data from well tops or drill holes 212, data from seismic interpretation 214, data from outcrop interpretation and optionally data from geological knowledge. As an example, the geological/geophysical data block 210 can include data from digital images, which can include digital images of cores, cuttings, cavings, outcrops, etc. As to the surface models block 220, it may provide for creation, editing, etc. of one or more surface models based on, for example, one or more of fault surfaces 222, horizon surfaces 224 and optionally topological relationships 226. As to the volume models block 230, it may provide for creation, editing, etc. of one or more volume models based on, for example, one or more of boundary representations 232 (e.g., to form a watertight model), structured grids 234 and unstructured meshes 236.

As shown in the example of Fig. 2, the system 200 may allow for implementing one or more workflows, for example, where data of the data block 210 are used to create, edit, etc. one or more surface models of the surface models block 220, which may be used to create, edit, etc. one or more volume models of the volume models block 230. As indicated in the example of Fig. 2, the surface models block 220 may provide one or more structural models, which may be input to the applications block 240. For example, such a structural model may be provided to one or more applications, optionally without performing one or more processes of the volume models block 230 (e.g., for purposes of numerical processing by the numerical processing block 250). Accordingly, the system 200 may be suitable for one or more workflows for structural modeling (e.g., optionally without performing numerical processing per the numerical processing block 250).

As to the applications block 240, it may include applications such as a well prognosis application 242, a reserve calculation application 244 and a well stability assessment application 246. As to the numerical processing block 250, it may include a process for seismic velocity modeling 251 followed by seismic processing 252, a process for facies and petrophysical property interpolation 253 followed by flow simulation 254, and a process for geomechanical simulation 255 followed by geochemical simulation 256. As indicated, as an example, a workflow may proceed from the volume models block 230 to the numerical processing block 250 and then to the applications block 240 and/or to the operational decision block 260. As another example, a workflow may proceed from the surface models block 220 to the applications block 240 and then to the operational decisions block 260 (e.g., consider an application that operates using a structural model).

In the example of Fig. 2, the operational decisions block 260 may include a seismic survey design process 261, a well rate adjustment process 262, a well trajectory planning process 263, a well completion planning process 264 and a process for one or more prospects, for example, to decide whether to explore, develop, abandon, etc. a prospect.

Referring again to the data block 210, the well tops or drill hole data 212 may include spatial localization, and optionally surface dip, of an interface between two geological formations or of a subsurface discontinuity such as a geological fault; the seismic interpretation data 214 may include a set of points, lines or surface patches interpreted from seismic reflection data, and representing interfaces between media (e.g., geological formations in which seismic wave velocity differs) or subsurface discontinuities; the outcrop interpretation data 216 may include a set of lines or points, optionally associated with measured dip, representing boundaries between geological formations or geological faults, as interpreted on the earth surface; and the geological knowledge data 218 may include, for example knowledge of the paleo-tectonic and sedimentary evolution of a region.

As to a structural model, it may be, for example, a set of gridded or meshed surfaces representing one or more interfaces between geological formations (e.g., horizon surfaces) or mechanical discontinuities (fault surfaces) in the subsurface. As an example, a structural model may include some information about one or more topological relationships between surfaces (e.g., fault A truncates fault B, fault B intersects fault C, etc.).

As to the facies and petrophysical property interpolation 253, it may include an assessment of type of rocks and of their petrophysical properties (e.g., porosity, permeability), for example, optionally in areas not sampled by well logs or coring. As an example, such an interpolation may be constrained by interpretations from log and core data, and by prior geological knowledge.

As to the various applications of the applications block 240, the well prognosis application 242 may include predicting type and characteristics of geological formations that may be encountered by a drill bit, and location where such rocks may be encountered (e.g., before a well is drilled); the reserve calculations application 244 may include assessing total amount of hydrocarbons or ore material present in a subsurface environment (e.g., and estimates of which proportion can be recovered, given a set of economic and technical constraints); and the well stability assessment application 246 may include estimating risk that a well, already drilled or to-be-drilled, will collapse or be damaged due to underground stress.

As to the operational decision block 260, the seismic survey design process 261 may include deciding where to place seismic sources and receivers to optimize the coverage and quality of the collected seismic information while minimizing cost of acquisition; the well rate adjustment process 262 may include controlling injection and production well schedules and rates (e.g., to maximize recovery and production); the well trajectory planning process 263 may include designing a well trajectory to maximize potential recovery and production while minimizing drilling risks and costs; the well trajectory planning process 264 may include selecting proper well tubing, casing and completion (e.g., to meet expected production or injection targets in specified reservoir formations); and the prospect process 265 may include decision making, in an exploration context, to continue exploring, start producing or abandon prospects (e.g., based on an integrated assessment of technical and financial risks against expected benefits).

The system 200 can include and/or can be operatively coupled to a system such as the system 100 of Fig. 1. For example, the workspace framework 110 may provide for instantiation of, rendering of, interactions with, etc., the graphical user interface (GUI) 120 to perform one or more actions as to the system 200. In such an example, access may be provided to one or more frameworks (e.g., DRILLPLAN, PETREL, TECHLOG, PIPESIM, ECLIPSE, INTERSECT, etc.). One or more frameworks may provide for geo data acquisition as in block 210, for structural modeling as in block 220, for volume modeling as in block 230, for running an application as in block 240, for numerical processing as in block 250, for operational decision making as in block 260, etc.

As an example, the system 200 may provide for monitoring data, which can include geo data per the geo data block 210. In various examples, geo data may be acquired during one or more operations. For example, consider acquiring geo data during drilling operations via downhole equipment and/or surface equipment. As an example, the operational decision block 260 can include capabilities for monitoring, analyzing, etc., such data for purposes of making one or more operational decisions, which may include controlling equipment, revising operations, revising a plan, etc. In such an example, data may be fed into the system 200 at one or more points where the quality of the data may be of particular interest. For example, data quality may be characterized by one or more metrics where data quality may provide indications as to trust, probabilities, etc., which may be germane to operational decision making and/or other decision making.

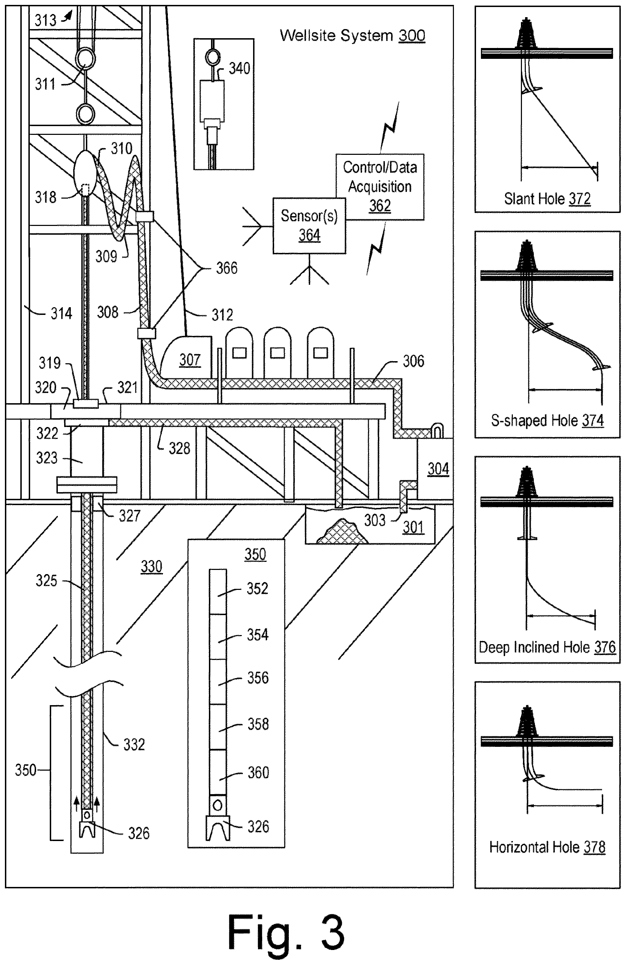

Fig. 3 shows an example of a wellsite system 300 (e.g., at a wellsite that may be onshore or offshore). As shown, the wellsite system 300 can include a mud tank 301 for holding mud and other material (e.g., where mud can be a drilling fluid), a suction line 303 that serves as an inlet to a mud pump 304 for pumping mud from the mud tank 301 such that mud flows to a vibrating hose 306, a drawworks 307 for winching drill line or drill lines 312, a standpipe 308 that receives mud from the vibrating hose 306, a kelly hose 309 that receives mud from the standpipe 308, a gooseneck or goosenecks 310, a traveling block 311, a crown block 313 for carrying the traveling block 311 via the drill line or drill lines 312, a derrick 314, a kelly 318 or a top drive 340, a kelly drive bushing 319, a rotary table 320, a drill floor 321, a bell nipple 322, one or more blowout preventers (BOPs) 323, a drillstring 325, a drill bit 326, a casing head 327 and a flow pipe 328 that carries mud and other material to, for example, the mud tank 301.

In the example system of Fig. 3, a borehole 332 is formed in subsurface formations 330 by rotary drilling; noting that various example embodiments may also use one or more directional drilling techniques, equipment, etc.

As shown in the example of Fig. 3, the drillstring 325 is suspended within the borehole 332 and has a drillstring assembly 350 that includes the drill bit 326 at its lower end. As an example, the drillstring assembly 350 may be a bottom hole assembly (BHA).

The wellsite system 300 can provide for operation of the drillstring 325 and other operations. As shown, the wellsite system 300 includes the traveling block 311 and the derrick 314 positioned over the borehole 332. As mentioned, the wellsite system 300 can include the rotary table 320 where the drillstring 325 pass through an opening in the rotary table 320.

As shown in the example of Fig. 3, the wellsite system 300 can include the kelly 318 and associated components, etc., or the top drive 340 and associated components. As to a kelly example, the kelly 318 may be a square or hexagonal metal/alloy bar with a hole drilled therein that serves as a mud flow path. The kelly 318 can be used to transmit rotary motion from the rotary table 320 via the kelly drive bushing 319 to the drillstring 325, while allowing the drillstring 325 to be lowered or raised during rotation. The kelly 318 can pass through the kelly drive bushing 319, which can be driven by the rotary table 320. As an example, the rotary table 320 can include a master bushing that operatively couples to the kelly drive bushing 319 such that rotation of the rotary table 320 can turn the kelly drive bushing 319 and hence the kelly 318. The kelly drive bushing 319 can include an inside profile matching, an outside profile (e.g., square, hexagonal, etc.) of the kelly 318; however, with slightly larger dimensions so that the kelly 318 can freely move up and down inside the kelly drive bushing 319.

As to a top drive example, the top drive 340 can provide functions performed by a kelly and a rotary table. The top drive 340 can turn the drillstring 325. As an example, the top drive 340 can include one or more motors (e.g., electric and/or hydraulic) connected with appropriate gearing to a short section of pipe called a quill, that in turn may be screwed into a saver sub or the drillstring 325 itself. The top drive 340 can be suspended from the traveling block 311, so the rotary mechanism is free to travel up and down the derrick 314. As an example, a top drive 340 may allow for drilling to be performed with more joint stands than a kelly/rotary table approach.

In the example of Fig. 3, the mud tank 301 can hold mud, which can be one or more types of drilling fluids. As an example, a wellbore may be drilled to produce fluid, inject fluid or both (e.g., hydrocarbons, minerals, water, etc.).

In the example of Fig. 3, the drillstring 325 (e.g., including one or more downhole tools) may be composed of a series of pipes threadably connected together to form a long tube with the drill bit 326 at the lower end thereof. As the drillstring 325 is advanced into a wellbore for drilling, at some point in time prior to or coincident with drilling, the mud may be pumped by the pump 304 from the mud tank 301 (e.g., or other source) via the lines 306, 308 and 309 to a port of the kelly 318 or, for example, to a port of the top drive 340. The mud can then flow via a passage (e.g., or passages) in the drillstring 325 and out of ports located on the drill bit 326 (see, e.g., a directional arrow). As the mud exits the drillstring 325 via ports in the drill bit 326, it can then circulate upwardly through an annular region between an outer surface(s) of the drillstring 325 and surrounding wall(s) (e.g., open borehole, casing, etc.), as indicated by directional arrows. In such a manner, the mud lubricates the drill bit 326 and carries heat energy (e.g., frictional or other energy) and formation cuttings to the surface where the mud may be returned to the mud tank 301, for example, for recirculation with processing to remove cuttings and other material.

In the example of Fig. 3, processed mud pumped by the pump 304 into the drillstring 325 may, after exiting the drillstring 325, form a mudcake that lines the wellbore which, among other functions, may reduce friction between the drillstring 325 and surrounding wall(s) (e.g., borehole, casing, etc.). A reduction in friction may facilitate advancing or retracting the drillstring 325. During a drilling operation, the entire drillstring 325 may be pulled from a wellbore and optionally replaced, for example, with a new or sharpened drill bit, a smaller diameter drillstring, etc. As mentioned, the act of pulling a drillstring out of a hole or replacing it in a hole is referred to as tripping. A trip may be referred to as an upward trip or an outward trip or as a downward trip or an inward trip depending on trip direction.

As an example, consider a downward trip where upon arrival of the drill bit 326 of the drillstring 325 at a bottom of a wellbore, pumping of the mud commences to lubricate the drill bit 326 for purposes of drilling to enlarge the wellbore. As mentioned, the mud can be pumped by the pump 304 into a passage of the drillstring 325 and, upon filling of the passage, the mud may be used as a transmission medium to transmit energy, for example, energy that may encode information as in mud-pulse telemetry. Characteristics of the mud can be utilized to determine how pulses are transmitted (e.g., pulse shape, energy loss, transmission time, etc.).

As an example, mud-pulse telemetry equipment may include a downhole device configured to effect changes in pressure in the mud to create an acoustic wave or waves upon which information may be modulated. In such an example, information from downhole equipment (e.g., one or more modules of the drillstring 325) may be transmitted uphole to an uphole device, which may relay such information to other equipment for processing, control, etc.

As an example, telemetry equipment may operate via transmission of energy via the drillstring 325 itself. For example, consider a signal generator that imparts coded energy signals to the drillstring 325 and repeaters that may receive such energy and repeat it to further transmit the coded energy signals (e.g., information, etc.).

As an example, the drillstring 325 may be fitted with telemetry equipment 352 that includes a rotatable drive shaft, a turbine impeller mechanically coupled to the drive shaft such that the mud can cause the turbine impeller to rotate, a modulator rotor mechanically coupled to the drive shaft such that rotation of the turbine impeller causes said modulator rotor to rotate, a modulator stator mounted adjacent to or proximate to the modulator rotor such that rotation of the modulator rotor relative to the modulator stator creates pressure pulses in the mud, and a controllable brake for selectively braking rotation of the modulator rotor to modulate pressure pulses. In such example, an alternator may be coupled to the aforementioned drive shaft where the alternator includes at least one stator winding electrically coupled to a control circuit to selectively short the at least one stator winding to electromagnetically brake the alternator and thereby selectively brake rotation of the modulator rotor to modulate the pressure pulses in the mud.

In the example of Fig. 3, an uphole control and/or data acquisition system 362 may include circuitry to sense pressure pulses generated by telemetry equipment 352 and, for example, communicate sensed pressure pulses or information derived therefrom for process, control, etc.

The assembly 350 of the illustrated example includes a logging-while-drilling (LWD) module 354, a measurement-while-drilling (MWD) module 356, an optional module 358, a rotary-steerable system (RSS) and/or motor 360, and the drill bit 326. Such components or modules may be referred to as tools where a drillstring can include a plurality of tools.

As to an RSS, it involves technology utilized for directional drilling. Directional drilling involves drilling into the Earth to form a deviated bore such that the trajectory of the bore is not vertical; rather, the trajectory deviates from vertical along one or more portions of the bore. As an example, consider a target that is located at a lateral distance from a surface location where a rig may be stationed. In such an example, drilling can commence with a vertical portion and then deviate from vertical such that the bore is aimed at the target and, eventually, reaches the target. Directional drilling may be implemented where a target may be inaccessible from a vertical location at the surface of the Earth, where material exists in the Earth that may impede drilling or otherwise be detrimental (e.g., consider a salt dome, etc.), where a formation is laterally extensive (e.g., consider a relatively thin yet laterally extensive reservoir), where multiple bores are to be drilled from a single surface bore, where a relief well is desired, etc.

One approach to directional drilling involves a mud motor; however, a mud motor can present some challenges depending on factors such as rate of penetration (ROP), transferring weight to a bit (e.g., weight on bit, WOB) due to friction, etc. A mud motor can be a positive displacement motor (PDM) that operates to drive a bit (e.g., during directional drilling, etc.). A PDM operates as drilling fluid is pumped through it where the PDM converts hydraulic power of the drilling fluid into mechanical power to cause the bit to rotate.

As an example, a PDM may operate in a combined rotating mode where surface equipment is utilized to rotate a bit of a drillstring (e.g., a rotary table, a top drive, etc.) by rotating the entire drillstring and where drilling fluid is utilized to rotate the bit of the drillstring. In such an example, a surface RPM (SRPM) may be determined by use of the surface equipment and a downhole RPM of the mud motor may be determined using various factors related to flow of drilling fluid, mud motor type, etc. As an example, in the combined rotating mode, bit RPM can be determined or estimated as a sum of the SRPM and the mud motor RPM, assuming the SRPM and the mud motor RPM are in the same direction.

The LWD module 354 may be housed in a suitable type of drill collar and can contain one or a plurality of selected types of logging tools. It will also be understood that more than one LWD and/or MWD module can be employed, for example, as represented by the module 356 of the drillstring assembly 350. Where the position of an LWD module is mentioned, as an example, it may refer to a module at the position of the LWD module 354, the module 356, etc. An LWD module can include capabilities for measuring, processing, and storing information, as well as for communicating with the surface equipment. In the illustrated example, the LWD module 354 may include a seismic measuring device.

The MWD module 356 may be housed in a suitable type of drill collar and can contain one or more devices for measuring characteristics of the drillstring 325 and the drill bit 326. As an example, the MWD tool 354 may include equipment for generating electrical power, for example, to power various components of the drillstring 325. As an example, the MWD tool 354 may include the telemetry equipment 352, for example, where the turbine impeller can generate power by flow of the mud; it being understood that other power and/or battery systems may be employed for purposes of powering various components. As an example, the MWD module 356 may include one or more of the following types of measuring devices: a weight-on-bit measuring device, a torque measuring device, a vibration measuring device, a shock measuring device, a stick slip measuring device, a direction measuring device, and an inclination measuring device.

Fig. 3 also shows some examples of types of holes that may be drilled. For example, consider a slant hole 372, an S-shaped hole 374, a deep inclined hole 376 and a horizontal hole 378.

A drilling operation can include directional drilling where, for example, at least a portion of a well includes a curved axis. For example, consider a radius that defines curvature where an inclination with regard to the vertical may vary until reaching an angle between approximately 30 degrees and approximately 60 degrees or, for example, an angle to approximately 90 degrees or possibly greater than approximately 90 degrees.

A directional well can include several shapes where each of the shapes may aim to meet particular operational demands. As an example, a drilling process may be performed on the basis of information as and when it is relayed to a drilling engineer. As an example, inclination and/or direction may be modified based on information received during a drilling process.

As explained, a system may be a steerable system and may include equipment to perform a method such as geosteering. A steerable system can include equipment on a lower part of a drillstring which, just above a drill bit, a bent sub may be mounted. Above directional drilling equipment, a drillstring can include MWD equipment that provides real time or near real time data of interest (e.g., inclination, direction, pressure, temperature, real weight on the drill bit, torque stress, etc.) and/or LWD equipment. As to the latter, LWD equipment can make it possible to send to the surface various types of data of interest, including for example, geological data (e.g., gamma ray log, resistivity, density and sonic logs, etc.).

The coupling of sensors providing information on the course of a well trajectory, in real time or near real time, with, for example, one or more logs characterizing the formations from a geological viewpoint, can allow for implementing a geosteering method. Such a method can include navigating a subsurface environment to follow a desired route to reach a desired target or targets.

A drillstring may include an azimuthal density neutron (ADN) tool for measuring density and porosity; a MWD tool for measuring inclination, azimuth and shocks; a compensated dual resistivity (CDR) tool for measuring resistivity and gamma ray related phenomena; one or more variable gauge stabilizers; one or more bend joints; and a geosteering tool, which may include a motor and optionally equipment for measuring and/or responding to one or more of inclination, resistivity and gamma ray related phenomena.

Geosteering can include intentional directional control of a wellbore based on results of downhole geological logging measurements in a manner that aims to keep a directional wellbore within a desired region, zone (e.g., a pay zone), etc. Geosteering may include directing a wellbore to keep the wellbore in a particular section of a reservoir, for example, to minimize gas and/or water breakthrough and, for example, to maximize economic production from a well that includes the wellbore.

Referring again to Fig. 3, the wellsite system 300 can include one or more sensors 364 that are operatively coupled to the control and/or data acquisition system 362. As an example, a sensor or sensors may be at surface locations. As an example, a sensor or sensors may be at downhole locations. As an example, a sensor or sensors may be at one or more remote locations that are not within a distance of the order of approximately one hundred meters from the wellsite system 300.

The system 300 can include one or more sensors 366 that can sense and/or transmit signals to a fluid conduit such as a drilling fluid conduit (e.g., a drilling mud conduit). For example, in the system 300, the one or more sensors 366 can be operatively coupled to portions of the standpipe 308 through which mud flows. As an example, a downhole tool can generate pulses that can travel through the mud and be sensed by one or more of the one or more sensors 366. In such an example, the downhole tool can include associated circuitry such as, for example, encoding circuitry that can encode signals, for example, to reduce demands as to transmission. Circuitry at the surface may include decoding circuitry to decode encoded information transmitted at least in part via mud-pulse telemetry. Circuitry at the surface may include encoder circuitry and/or decoder circuitry and circuitry downhole may include encoder circuitry and/or decoder circuitry. As an example, the system 300 can include a transmitter that can generate signals that can be transmitted downhole via mud (e.g., drilling fluid) as a transmission medium.

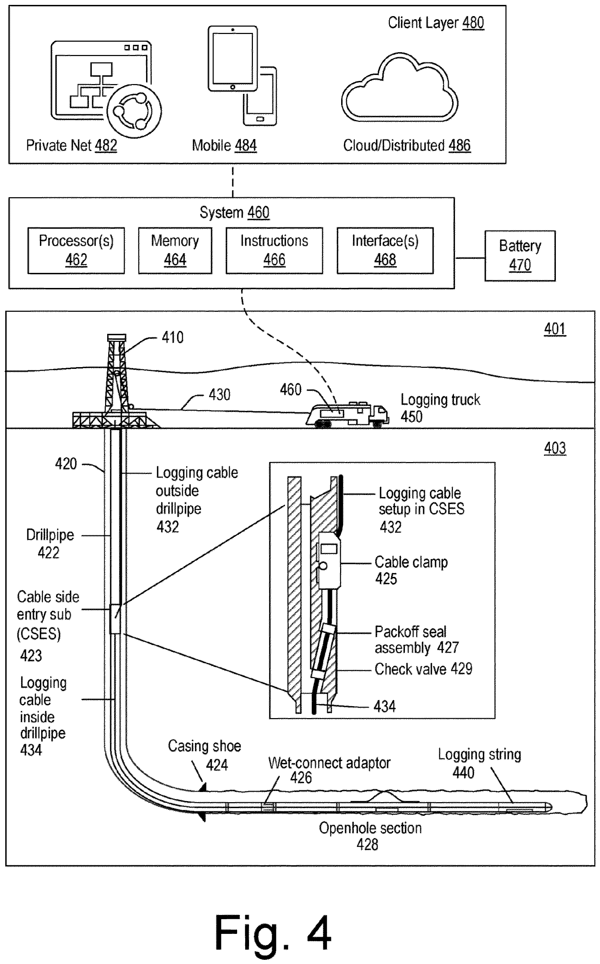

Fig. 4 shows an example of an environment 401 that includes a subterranean portion 403 where a rig 410 is positioned at a surface location above a bore 420. In the example of Fig. 4, various wirelines services equipment can be operated to perform one or more wirelines services including, for example, acquisition of data from one or more positions within the bore 420.

As an example, a wireline tool and/or a wireline service may provide for acquisition of data, analysis of data, data-based determinations, data-based decision making, etc. Some examples of wireline data can include gamma ray (GR), spontaneous potential (SP), caliper (CALI), shallow resistivity (LLS and ILD), deep resistivity (LLD and ILD), density (RHOB), neutron porosity (BPHI or TNPH or NPHI), sonic (DT), photoelectric (PEF), permittivity and conductivity.

In the example of Fig. 4, the bore 420 includes drillpipe 422, a casing shoe 424, a cable side entry sub (CSES) 423, a wet-connector adaptor 426 and an openhole section 428. As an example, the bore 420 can be a vertical bore or a deviated bore where one or more portions of the bore may be vertical and one or more portions of the bore may be deviated, including substantially horizontal.

In the example of Fig. 4, the CSES 423 includes a cable clamp 425, a packoff seal assembly 427 and a check valve 429. These components can provide for insertion of a logging cable 430 that includes a portion 432 that runs outside the drillpipe 422 to be inserted into the drillpipe 422 such that at least a portion 434 of the logging cable runs inside the drillpipe 422. In the example of Fig. 4, the logging cable 430 runs past the casing shoe 424 and the wet-connect adaptor 426 and into the openhole section 428 to a logging string 440.

As shown in the example of Fig. 4, a logging truck 450 (e.g., a wirelines services vehicle) can deploy the wireline 430 under control of a system 460. As shown in the example of Fig. 4, the system 460 can include one or more processors 462, memory 464 operatively coupled to at least one of the one or more processors 462, instructions 466 that can be, for example, stored in the memory 464, and one or more interfaces 468. As an example, the system 460 can include one or more processor-readable media that include processor-executable instructions executable by at least one of the one or more processors 462 to cause the system 460 to control one or more aspects of equipment of the logging string 440 and/or the logging truck 450. In such an example, the memory 464 can be or include the one or more processor-readable media where the processor-executable instructions can be or include instructions. As an example, a processor-readable medium can be a computer-readable storage medium that is not a signal and that is not a carrier wave.

Fig. 4 also shows a battery 470 that may be operatively coupled to the system 460, for example, to power the system 460. As an example, the battery 470 may be a back-up battery that operates when another power supply is unavailable for powering the system 460 (e.g., via a generator of the wirelines truck 450, a separate generator, a power line, etc.). As an example, the battery 470 may be operatively coupled to a network, which may be a cloud network. As an example, the battery 470 can include smart battery circuitry and may be operatively coupled to one or more pieces of equipment via a SMBus or other type of bus.

As an example, the system 460 can be operatively coupled to a client layer 480. In the example of Fig. 4, the client layer 480 can include features that allow for access and interactions via one or more private networks 482, one or more mobile platforms and/or mobile networks 484 and via the "cloud" 486, which may be considered to include distributed equipment that forms a network such as a network of networks. As an example, the system 460 can include circuitry to establish a plurality of connections (e.g., sessions). As an example, connections may be via one or more types of networks. As an example, connections may be client-server types of connections where the system 460 operates as a server in a client-server architecture. For example, clients may log-in to the system 460 where multiple clients may be handled, optionally simultaneously.

While the example of Fig. 4 shows the system 460 as being associated with the logging truck 450, one or more features of the system 460 may be included in a downhole assembly, which may be a wireline assembly and/or a LWD assembly. In such an approach, various computations may be performed downhole where results thereof may be optionally transmitted to surface (e.g., to the logging truck 450, etc.) using one or more telemetric technologies and/or techniques (e.g., mud-pulse telemetry, wireline, etc.).

As an example, a tool can include one or more features of the ORA platform (SLB, Houston, Texas). The ORA platform includes various tool options, which include metrology options (e.g., various types of sensors that may be disposed in a sensor array, etc.). For example, consider a tool that includes a fluid in situ scanner that can measure one or more of density and viscosity, resistivity, and full-spectrum viscosity. As an example, a tool can include one or more pressure sensors (e.g., quartz, etc.) and/or one or more temperature sensors. As an example, a tool can include one or more sensors for measurement of oil, water and gas volume fraction, composition, color, etc. As to composition sensing, consider sensing of C, to C₆ or C₆₊ (e.g., with uncertainty less than approximately 6 weight percent) and, for example, sensing of CO₂. As to fluid density, consider a range from approximately 0.01 to 2.0 g/cm³. As to fluid viscosity, consider a range from 0.1 to 300 cP. As to color, consider optical density as a measurement. As to optical measurements, for example, a tool can include a spectrophotometer, a fluorescence meter, etc.

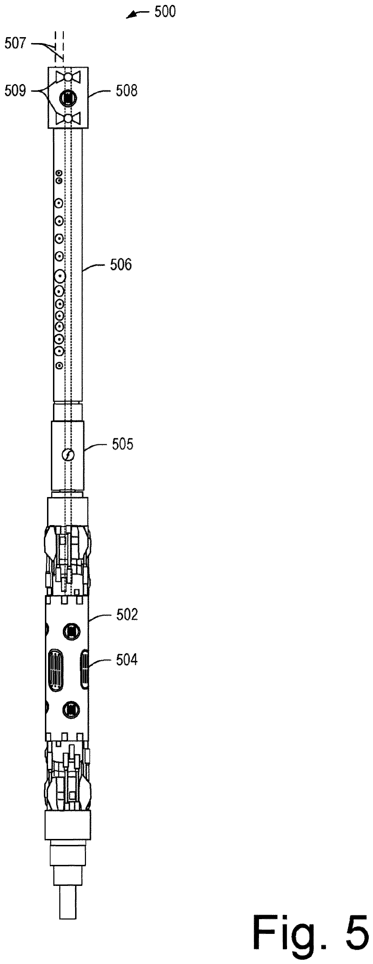

Fig. 5 shows an example of a tool 500 that can include various features of the ORA platform. For example, the tool 500 is shown as including a sensor array 506. In the example of FIG. 5, the tool 500 is shown as including a pumping assembly 505, power and/or data lines 507 and a fluid controller 508. Such a fluid controller can include passages and one or more valves 509. As an example, the fluid controller 508 can receive fluid in one or more manners. For example, consider receipt of fluid via an upper inlet, a lower inlet and/or a side inlet where an inlet may be in fluid communication with a passage, where flow may be controlled. As an example, the fluid controller 508 can include one or more outlets where, for example, an inlet may be operable as an outlet or vice versa. In the example of Fig. 5, fluid may be directed from a lower portion of the tool 500 upwardly to an upper portion of the tool 500 where the fluid may flow via one or more outlets to an annular space that may be defined at least in part by an outer surface of a portion of the tool 500.

In the example of FIG. 5, the tool 500 may include one or more passages that extend at least in part axially along the tool 500. As an example, fluid may be directed, for example, in a controllable manner, to one or more sensors of the sensor array 506, which may include a port or ports. For example, consider flowing fluid from the inlet 504 to a passage and to a sensor of the sensor array 506 for performing one or more measurements where the fluid may pass out of the tool 500 via a port. As an example, the pump assembly 505 may include one or more pumps that can be in fluid communication with one or more passages, which may be via control of one or more valves, etc. As an example, a pump may be utilized for one or more purposes, which can include, for example, one or more of sampling, moving fluid along the tool, moving fluid out of the tool, moving fluid to a sensor, moving fluid to sensors, moving fluid into the tool, inflating one or more packers, etc. As an example, one or more packer assemblies may be positioned along a length of the tool 500 and/or operatively coupled to the tool 500 and/or inflatable to form a seal against a surface of the tool 500.

As explained, a tool can include one or more packer assemblies where, for example, an inflatable seal or seals may be transitioned from an uninflated state to an inflated state. For example, consider introduction of fluid at hydrostatic pressure into the interior of an inflatable seal that can cause the inflatable seal to inflate until one or more layers of the inflatable seal have contacted a formation or a wellbore wall (e.g., casing or open wellbore wall). In such an example, the inflatable seal can inflate due to the hydrostatic pressure within the interior of the inflatable seal being greater than a pressure in a drawdown zone (e.g., a sampling zone for inflow of formation fluid, etc.). A process referred to as drawdown may include use of one or more pumps (e.g., rotating, reciprocating, piston, etc.) in the tool 500, which may be utilized to decrease the pressure in a drawdown zone to cause fluid from the formation to enter one or more inlets (e.g., on a packer assembly, between packers, etc.). When the pressure in a drawdown zone is less than a formation pressure, the differential pressure may cause fluid to flow out from the formation and into the drawdown zone. An inflatable seal or seals can help to hinder fluid in a sampling zone from mixing with other fluid.

As an example, the tool 500 can include various types of circuitry, including digital circuitry, which may provide for control of one or more features. The tool 500 can include a multi-flowline architecture and downhole automation capabilities. As an example, the tool 500 can include one or more wideband downhole pumps that may be automated via flow control, for example, with flow rates that may be, for example, in a range from approximately 0.001 bbl/d to over 100 bbl/d. As an example, the sensor array 506 may be operable from an inside out approach and/or an outside in approach, for example, depending on direction of fluid flow. As an example, a multi-flowline fluid analyzer can be included in the sensor array 506 that can help to quantify fluid properties with laboratory-accuracy metrology (e.g., consider one or more of multi-flowline spectrometry, calibrated resistivity, high-accuracy density, wide-spectrum viscosity, high-accuracy and -resolution pressure gauges, etc.).

As to some examples of formation fluid samples, consider a well that may produce 100 bbl/day or more where a sample may be in a range from less than a barrel to more than 20 barrels (e.g., consider 25 bbl of formation fluid). As an example, a sample may be of a volume from a few liters to a thousand liters or more. As explained, sampling may be controlled optionally using one or more types of sensor data. For example, the flow controller 508 may be controlled locally downhole and/or from surface (e.g., a surface station, etc.) using one or more types of sensor data. As an example, consider a method where sensor data values acquired using the sensor array 506 can automatically control (e.g., trigger) one or more valves of the flow controller 508. In such an example, where formation fluid sampled via the inlet 504 (e.g., where the packer 502 is inflated, etc.) reaches a relatively "clean" (e.g., relatively constant readings) state, the flow controller 508 may direct flow to an annular region (e.g., via an outlet of the tool 500, an outlet of the flow controller 508, etc.). As an example, the flow controller 508 may be part of the tool 500 or may be operatively coupled to the tool 500 to perform one or more tasks as to sampled fluid, etc.

As to sizes of a riser, casing, a drillstring, etc., diameters may be generally less than approximately 1 meter. For example, consider a tool that is capable of being deployed in a borehole in a diameter with a range from approximately 20 cm to approximately 35 cm. In such an example, the tool can have a diameter of about 12 cm and include one or more packers that can be extendable to a diameter sufficient to contact a borewall of a borehole (e.g., for isolation of a formation region for sampling, etc.). As an example, a tool may have a length that is in excess of 1 meter, which may be as long as 30 meters or more. As to mass, consider a tool that has a mass of approximately 100 kg to approximately 1000 kg or more.

As mentioned, a tool can include one or more pumps. For example, the ORA platform provides a tool that can include multiple pumps. In such an example, a pump may be dedicated for sample and guard flowlines where pump control circuitry can provide for control of rate and pressure in each line. As an example, flow rates may be in a range from approximately 0.05 cm³/s to approximately 200 cm³/s or more (e.g., 0.025 to 108 bbl/day) and with differential pressure up to approximately 55 MPa or more (e.g., 8,000 psi or more).

As mentioned, equipment may be provided for handling of gas. For example, consider a separator that can separate one or more components of formation fluid as sampled using a downhole tool. As an example, handling of gas can include handling of pressurized samples and/or unpressurized samples of fluids, which may be collected in a sample chamber, a tank, etc.

As an example, a tool can include one or more features of the MDT platform (SLB, Houston, Texas). The MDT platform includes features for formation testing such as, for example, formation pressure measurement and fluid contact identification, formation fluid sampling, permeability measurement, permeability anisotropy measurement, mini-drillstem test (DST) and productivity assessment, and in-situ stress and minifrac testing. The MDT platform can include features that provide for acquiring multiple samples in a single trip, multiprobe and inflatable dual packer options, efficient integration with one or more other tools, pressure measurement using crystal quartz gauge(s), programmable pretest pressure with rate and volume, filtrate pumpout prior to sampling, fluid resistivity and temperature measurements at a probe, quantitative sample contamination measurement with optical spectroscopy, low-shock and single-phase sampling, database-driven pumpout time guidance, etc.

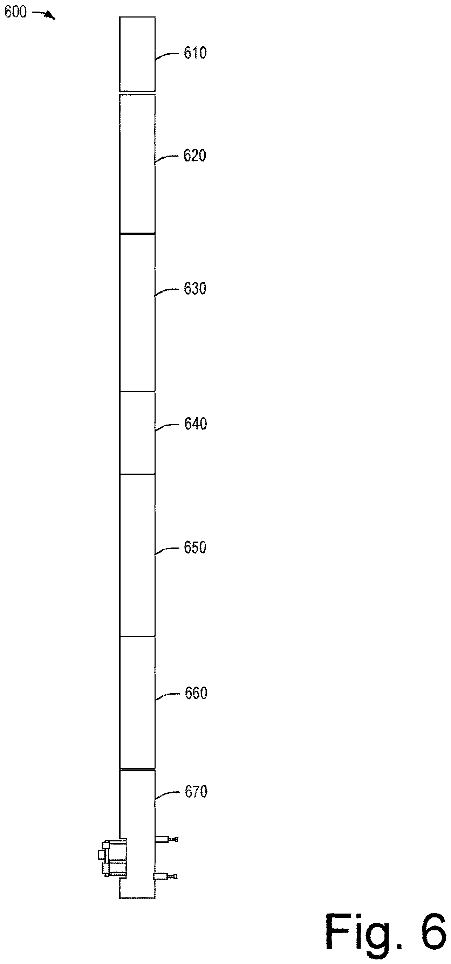

Fig. 6 shows an example of a tool 600 that can include various features of the MDT platform. For example, the tool 600 can include a power cartridge 610, multisample modules 620, sample chambers 630, a pumpout module 640, a live fluid analyzers 650, a hydraulic power module 660 and a probe module 670 (e.g., single-probe, multi-probe, etc.).

A single-probe module (MRPS) can include a probe assembly, (with packer and telescoping backup pistons), pressure gauges, fluid resistivity and temperature sensors, and a pretest chamber (e.g., 20 cc). A MRPS can also include a strain gauge and an accurate, high-resolution, quick response quartz gauge. A volume, rate and drawdown of a chamber can be controlled from the surface to adjust to a test situation. A dual-probe module (MRPD) can include two probes mounted back-to-back, 180 degrees apart on a common block. When combined with an MRPS module, it can form a multiprobe system capable of determining horizontal and vertical permeability. During a test with an MRPD module, formation fluid can be diverted through a sink probe to a pretest chamber in the flow control module (e.g., 1 liter). The MRPD module, in conjunction with the pressure measured at the vertical probe from the MRPS module, measures the pressure at both probes. These measurements can be used to determine near-wellbore permeability anisotropy. Flexible probe configurations are a unique feature of the MDT tool. By running multiple probe modules, pressure communication between adjacent formations can be monitored during an interference test. The MDT multiprobe configuration also allows in-situ verification of gauge quality and utilization of two different probe assemblies for redundancy under various conditions.

As mentioned, a test may be a pressure test as a downhole type of pressure test. Various types of pressure tests may be downhole and/or surface types. Whether downhole or surface, a pressure test may aim to measure or isolate a particular portion of a borehole (e.g., a borehole or wellbore interval). A transient pressure test is a type of pressure test that can provide for assessing reservoir performance by measuring flow rates and pressures under a range of flowing conditions and applying acquired data to one or more types of models. As an example, data relating to an interval under test, such as reservoir height and details of the reservoir fluids, may be model inputs. In such an example, resulting outputs can include, for example, an assessment of reservoir permeability, the flow capacity of the reservoir and indications of damage that may be restricting productivity. Results from various types of pressure tests may be combined, for example, to develop a more accurate model of a subsurface region with respect to fluid, pressure, rock, etc., properties, locations, etc.

As an example, a test may be in a particular type of subsurface region that is characterized at least in part based on temperature and/or pressure. For example, consider a high pressure and high temperature (HPHT) borehole, well or wellbore, which may, for example, have an undisturbed bottomhole temperature of greater than 300 degF (e.g., 149 degC) and a pore pressure of at least 0.8 psi/ft (e.g., -15.3 Ibm/galUS) or requiring a blowout protector with a rating in excess of 10,000 psi (e.g., 68.95 MPa). As an example, depending on downhole conditions and depth, testing may be performed in a particular manner, where expedited testing may aim to reduce wear and tear on a downhole tool.

As an example, a tool can be a drillstring tool, a wireline tool, a coiled tubing tool, etc. As an example, a tool may be run on an electric logging cable that pushes a probe into the formation, which then allows production into a small closed chamber. Such a tool may be used to obtain formation pressures at chosen locations in an interval, and, with an accurate quartz gauge, permeability estimates may be obtained. As an example, such a tool may include features to acquire formation-fluid samples.

As explained, one or more types of pressure tests may be performed downhole along a borehole. As to formation pressure, it can represent pressure of fluid(s) within pores of a reservoir, such as, for example, hydrostatic pressure, or the pressure exerted by a column of water from the formation's depth to sea level. When impermeable rocks are compacted, their pore fluids cannot always escape such that the rocks and pore fluids support a total overlying rock column, leading to anomalously high formation pressures. As reservoir pressure changes as fluids are produced from a reservoir, pressure may be described as measured at a specific time, such as initial reservoir pressure. As an example, pressure test information may be utilized for one or more purposes, which can include modeling; decision making as to equipment, drilling, etc.; decision making as to production and/or injection techniques; etc.

In various instances, a test may be considered to be valid or may be considered to be invalid. An invalid test can be a waste of time, energy, etc. For example, an invalid test may take a matter of hours to perform and provide no meaningful data other than the test is invalid, which may be related to one or more conditions. Such one or more conditions may be related to the test, the tool, the formation, fluid(s), etc. Where a test is being performed during drilling operations, drilling may be halted for a period of time sufficient to perform the test. If such a test is invalid, it may introduce a considerable amount of non-productive time (NPT), which could otherwise have been utilized to perform a valid test or perform drilling.

As to determination of where tests are to be performed, an individual or a team may examine various types of data and utilize personal domain expertise to select various measured depths where the tests are to be performed. For example, consider a selection of 50 measured depths as test locations along a borehole where at each of the selected measured depths is a location at which a test is to be performed. In such an example, the number of invalid tests, for one or more reasons, can be substantial. For example, consider 25 out of 50 tests as being invalid tests. An invalid test rate of 50 percent is not uncommon where, such invalid tests, can waste considerable time and resources. Invalid tests can result in an extended period of time for having a tool in a downhole environment. Such an extended period of time, along with performance of the invalid tests, can cause tool wear as well as wear of deployment equipment.

As an example, a downhole tool test framework can improve testing such as, for example, by improving selection of test locations. In such an example, the downhole tool test framework can utilize data for valid tests and invalid tests to train one or more machine learning models (ML models) to generate one or more trained ML models. In such an example, a trained ML model may be provided data for a region, which may be specific to a particular well, and output a log indicative of where tests are more likely to be valid than invalid. For example, consider an ML model that can generate binary output for a valid class and an invalid class. Such an ML model may also output a corresponding probability of belonging to a class. For example, consider a probability log that indicates a percent of a given input being a member of an indicated class.

As explained, a downhole tool test framework may include a classification mechanism that operates on input to output a class for that input. While a binary classification mechanism is mentioned, a classification may involve more than two classes. However, the number of classes can depend on training data. For example, where training data are divided into valid and invalid classes in a range from 60:40 percent to 40:60 percent, the training data may be considered to be relatively balanced. Whereas, if a class is present in training data at a relatively low percentage, then that class may be relatively uncommon or even an anomaly. Under such circumstances, the training data may be considered unbalanced. Given that current, manual practices for various tests tend to provide relatively balanced data for a few classes (e.g., two classes to five classes), such data can be suitable for use in training one or more ML models. As an example, where one or more classes are desired to be included where training data are somewhat unbalanced for such one or more classes, a ML model or ML models may utilize one or more types of anomaly detection techniques.

As an example, a downhole tool test framework can be a smart testing advisor (STA) framework, which can provide for a paradigm shift to formation testing smart planning via an end-to-end workflow.

Formation pressure and sampling testing operations provide valuable information of a reservoir with multitude of applications in an entire cycle of an operation. As explained, a workflow for recording data can involve planning of sample points based on user knowledge of one or more of reservoir fluid, petrophysical properties of the rock, geology of the formation, tools utilized for testing and borehole quality, etc. Often, at least several selected testing depths eventually end up with either suboptimal data or an inability to successfully test the depths. As explained, such outcomes affect time and cost of an operation, possibly generating poor quality of recorded data.

As an example, a downhole tool test framework can utilize an end-to-end petro-reservoir model and workflow. A smart petro-reservoir advisor can provide for test selection and optimization. As an example, a framework can provide output such as a depth derived pressure test type flag along with the probability of each test type across a range of depths and optionally a mobility index log across the range of depths.

Mobility can be defined as the ratio of effective permeability to phase viscosity. The overall mobility can be determined as a sum of individual phase viscosities. Well productivity tends to be directly proportional to the product of the mobility and the layer thickness product. Effective permeability can be defined as the ability to preferentially flow or transmit a particular fluid when other immiscible fluids are present in the reservoir (e.g., effective permeability of gas in a gas-water reservoir). Relative saturations of fluids as well as the nature of a reservoir affect effective permeability. Absolute permeability can be defined as a measurement of permeability conducted when a single fluid or phase is present in rock. Pressure tests and/or various other tests can depend on mobility. For example, one type of test equipment may be suitable for a low mobility while another type of test equipment may be suitable for a high mobility. As a particular example, consider test equipment that involves pumping using one or more pumps. In such an example, a stronger pump (e.g., higher pressure differential or pressure head rating) may be appropriate for low mobility (e.g., due to low effective permeability and/or high viscosity).

As an example, a framework can include an automatic data ingestion pipeline, domain knowledge-based data cleaning features and a petro-reservoir model that can generate output. Such output can be a smart advisor output that can optimize pressure points selection, predict test type with expected probability and, for example, decide on tool(s) and/or timing of operations based on mobility index before performing actual operations.

As explained, planning of testing processes tend to involve manual, subjective determinations that rely on personal expertise and knowledge, which can vary from individual to individual. Such an approach can make planning less consistent and can make improving planning more challenging. For example, one individual may have more experience with clastic reservoirs while another individual may have more experience with carbonate reservoirs. If one of these individuals is called upon to crossover from one type of reservoir to another, planning and operations can differ, which may differ in a manner that is suboptimal.

Individual experience and knowledge in sedimentology, which is the study of modern sediments such as sand, silt, and clay, and processes that result in their formation (erosion and weathering), transport, deposition and diagenesis, can impact planning of testing operations. For example, various types of tests can depend on factors related to diagenesis.

Diagenesis is the physical, chemical or biological alteration of sediments into sedimentary rock at relatively low temperatures and pressures that can result in changes to original mineralogy and texture of rock. After deposition, sediments can be compacted as they are buried beneath successive layers of sediment and cemented by minerals that precipitate from solution. Grains of sediment, rock fragments and fossils can be replaced by other minerals during diagenesis. Porosity tends to decrease during diagenesis, except in rare cases such as dissolution of minerals and dolomitization. Hydrocarbon generation begins during diagenesis.

As to clastic rocks, they are composed of particles derived from weathering and erosion of precursor rocks and consist primarily of fragmental material. Clastic rocks are classified according to their predominant grain size and their composition. Organic sedimentary rocks are deposits formed from the accumulation of biological detritus, and can form coal and oil shale deposits, and can be often found within basins of clastic sedimentary rocks. As to carbonates, they are composed of various carbonate minerals (e.g., calcium carbonate (CaCOs)) precipitated by a variety of organic and inorganic processes. Sediment consisting of broken fragments derived from preexisting rocks and transported elsewhere and redeposited before forming another rock.

Examples of common clastic sedimentary rocks include siliciclastic rocks such as, for example, conglomerate, sandstone, siltstone and shale. Carbonate rocks can also be broken and reworked to form clastic sedimentary rocks. As mentioned, carbonates tend to be primarily (e.g., 95 percent or more) calcium-based minerals (e.g., calcite and aragonite (both CaCos) and dolomite (CaMg(CO₃)₂), a mineral that can replace calcite during the process of dolomitization). Limestone, dolostone or dolomite, and chalk are carbonate rocks. Although carbonate rocks can be clastic in origin, they are more commonly formed through processes of precipitation or the activity of organisms such as coral and algae. Carbonates form in shallow and deep marine settings, evaporitic basins, lakes, and windy deserts. Carbonate rocks can serve as hydrocarbon reservoir rocks, particularly if their porosity has been enhanced through dissolution. Carbonates rely on fractures for permeability. While in some instances rocks can be clastic and carbonate, many reservoirs can be classified as being clastic or carbonate. As an example, a petro-reservoir description can include describing a reservoir as being clastic or carbonate.

As an example, a method can include segregating data into classes such as clastic and carbonate. In such an example, an ML model can be trained using clastic data and another ML model can be trained using carbonate data. As explained, a framework can utilize one or more ML models. For example, consider a framework that includes a clastic ML model and a carbonate ML model where a user may select one or the other and/or where an ML model may be selected automatically, for example, based on location data, input formation-based data, etc. By utilizing reservoir classes, a reservoir class ML model may be more accurate in its classifications for downhole tests than an ML model that attempts to handle multiple, different types of reservoirs.

As explained, manual procedures can introduce a degree of user biasness in terms of selection of optimal test depths. While experience plays a genuine role, it is unable to account for various types of error that can impact planning of operations and decisions as to tool types of operations and/or further operations. Additionally, the planning of operations may include one or more offset well studies to understand fluid and formation behavior, which requires field knowledge and requires considerable time to finish the study.

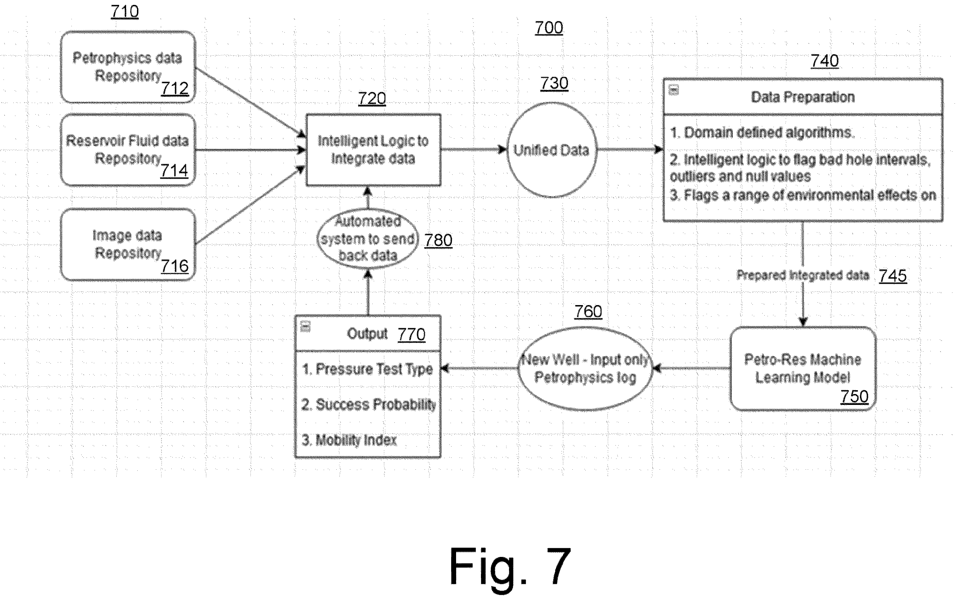

Fig. 7 shows an example of a system 700 that can be or include a downhole tool test framework as a computational framework. Such a system may be part of a field system. For example, consider the system 700 as being part of the system 460 of Fig. 4, which may be remote and/or local. As an example, a system may be part of an on-site system such as, for example, a logging truck system, a rig system, etc. As an example, the system 700 may be part of a system that includes and/or is operatively coupled to a framework such as the TECHLOG framework. For example, consider one or more types of logs being acquired by the TECHLOG framework and utilized by a ML model or ML models to generate test location recommendations along a borehole.

In the example of Fig. 7, various data sources 710 are shown that can include a petrophysics data repository 712, a reservoir fluid data repository 714 and an image data repository 716 (e.g., rock images, borehole images, etc.). As explained, data from one or more sources may be classified according to reservoir type (e.g., clastic, carbonate, etc.). In the example of Fig. 7, data from the data sources 710 can be processed by an integration component 720 to generate unified data 730. In such an example, the unified data 730 can be processed by a data preparation component 740. For example, the data preparation component 740 can provide one or more domain defined features; intelligent logic to flag bad hole intervals, outliers and null values; and flags for one or more ranges of environmental effects on data. As shown, the data preparation component 740 can output prepared integrated data 745, which can be utilized by a petro-reservoir ML model 750. For example, the system 700 can include training one or more ML models using the prepared integrated data 745.

As an example, data may be selected and integrated to form petrophysics and reservoir data (e.g., petro-reservoir data), which may include joining of data that can account for depths. For example, reservoir pressure test data can be at particular depths whereas petrophysical log data can be relatively continuous with respect to depth. In such an example, reservoir pressure test data can be joined to petrophysical log data at particular depths. Such joined or integrated data can ease training of one or more ML models. While pressure test data are mentioned, a system may be suitable to handle one or more other types of data (e.g., one or more other types of tests, etc.), which can be or include reservoir data. As explained, data may be segregated based on sedimentology, which can include classes such as clastic and carbonate.

As shown in the example of Fig. 7, the petro-reservoir ML model 750 can receive input 760 to generate output 770. In such an example, the input may be a petrophysics log or logs for a new well where one or more downhole tools are to be deployed for testing. In such an example, the petrophysics log or logs may be the defined input for the ML model 750 such that it can operate to generated output solely based on the petrophysics log or logs. As the number of different types of petrophysics logs can be more than 10, more than 20, etc. (e.g., consider 30 or more), a system may provide for evaluation of input such that the number and types of petrophysics logs are optimized. For example, consider an optimization process that can hone in on less than 10 different types of logs for training an ML model and for generation of reliable output. In such an example, consider exclusion of a particular log in relationship to a type of test to be performed where the underlying petrophysics of the log tend to have little impact on the type of test to be performed.

As shown in the example of Fig. 7, the output 770 can include, for example, pressure test type (e.g., valid or invalid), success probability (of being valid) and optionally mobility index. In the example of Fig. 7, the output 770 may be utilized to control one or more downhole tools where, as indicated by a component 780, acquired data may be automatically transmitted to the system 700 for integration of the acquired data by the integration component 720. In such an example, the system 700 can provide for enhancing the ML model 750 during actual field operations. For example, the system 700 may improve test validity from being 40:60 to being 70:30 (valid to invalid). As data may be generated as to both classes (e.g., valid and invalid), such data may be utilized to further enhance performance of the ML model 750. For example, some amount of retraining can occur using acquired data from operations guided by the system 700.

As explained, a framework can include various components that can provide for implementation of one or more workflows. For example, consider a framework that provides a data ingestion pipeline that can automatically include new data into a workflow; domain defined data cleaning and preparation algorithms that clean input logs for environmental effects, remove outliers and/or null values, ignore washed out intervals where data may be considerably affected; an integration algorithm with intelligent queries to integrate petrophysical logs such as, for example, gamma ray, spectral gamma ray, thermal neutron porosity, density, photoelectric factor, compressional slowness with historical formation testing information, etc.; and a petro-reservoir ML model that may incorporate hybrid approach using physics and one or more data-driven techniques that incorporates petrophysical properties with formation fluid value and borehole caliper data where features can be included for an ability to integrate borehole image information of fractures into the ML model (e.g., where available to enhance confidence).

As mentioned, washout intervals may be handled by a framework. A washout is an enlarged region of a wellbore where a washout in an openhole section is larger than the original hole size or size of the drill bit. Washout enlargement can be caused by excessive bit jet velocity, soft or unconsolidated formations, in-situ rock stresses, mechanical damage by BHA components, chemical attack and swelling or weakening of shale as it contacts fresh water. In various instances, washouts can become more severe with time. To reduce washouts, appropriate mud types, mud additives and/or increased mud density may be utilized.

As an example, a washout may be indicated on a caliper log. A caliper log provides a representation of the measured diameter of a borehole along its depth. Caliper logs may be measured mechanically, sonically, etc. A downhole caliper tool can measure diameter at a specific chord across a wellbore. As wellbores can be irregular (rugose), a tool may simultaneously measure diameter at several different locations. For example, consider a multifinger caliper. Drilling engineers or rigsite personnel use caliper measurement as a qualitative indication of both the condition of the wellbore and the degree to which the mud system has maintained hole stability. Caliper data may be integrated to determine volume of an openhole, which may then be used in planning cementing operations. As explained with respect to the system 700, caliper data that may be utilized for one or more purposes such as, for example, indication of washout where a test may be performed in various non-washed-out intervals. As an example, the system 700 can include a washout exclusion feature that excludes washout intervals from consideration in testing.

As explained, one or more ML models can be selected and trained. As an example, a ML model can be tailored to particular input features, which can be selected (e.g., via one or more processes). As an example, hyperparameters and properties of an ML model along with weightage of each input feature may be defined through use of a physics-based approach that understates the behavior of petrophysical properties and formation fluid and the impact of borehole quality.

As explained with respect to the system 700 of Fig. 7, for a new well, output can be generated using solely a set of petrophysical logs. In such an example, input data can be submitted to a workflow where output is a depth-based pressure test type (e.g., valid or invalid) along with the probability of achieving a valid or invalid test type across an open-hole wellbore under consideration. As an example, an additional mobility index curve may be generated across depth that can provide for dividing formations into different mobility indexes. A mobility index curve can enable smart decision making of a formation testing tool type along with the general optimization of testing depths.

As explained, data and output may be automatically ingested into a master repository making it an end-to-end self-enhancing workflow. As an example, a system may be dynamic and respond to new data. As an example, a system such as the system 700 of Fig. 7 may provide a workflow execution time between input and output of the order of a few minutes. For example, given input, output for operations can be planned within a few minutes.

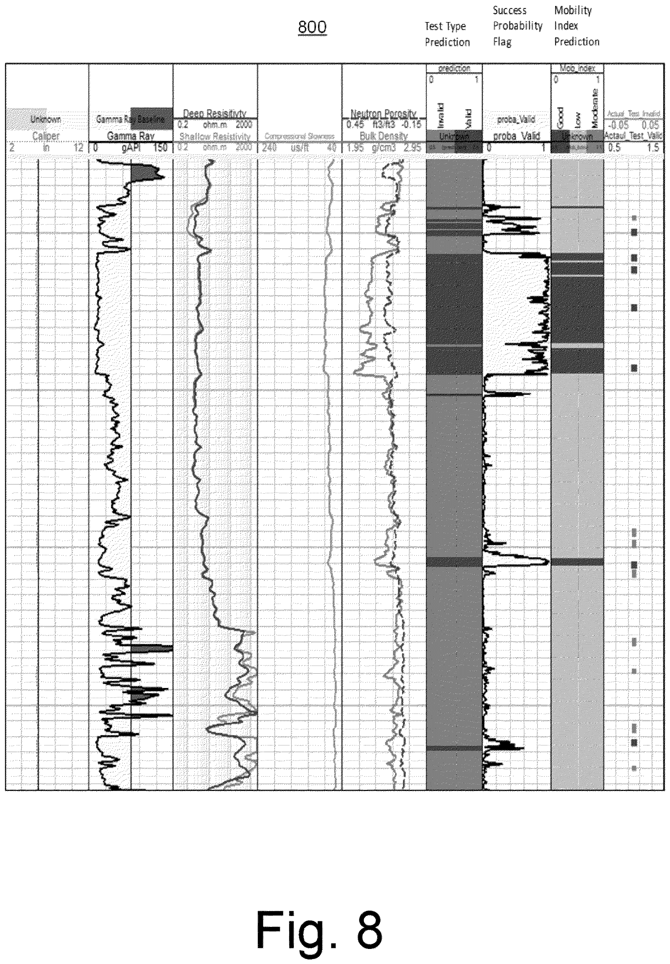

Fig. 8 shows an example of a graphical user interface (GUI) 800 that includes a well Log display across depth with the predictions (e.g., classifications, etc.) and comparisons against actual data (rightmost track). In the GUI 800, invalid and valid are indicated. As shown, a test type prediction (e.g., classification) track is a series of valid and invalid regions (e.g., intervals) where a success probability track indicates both a probability of valid and/or a probability of invalid. As to mobility index, it is indicated in a mobility index prediction track with classifications of good, low and moderate. As mentioned, the rightmost track provides for comparisons of the test prediction track to actual tests.

As to the first five tracks, these correspond to petrophysics log inputs. As shown, the inputs can include a caliper log, a gamma ray log, a deep and shallow resistivity log, a compressional slowness log, and a neutron porosity and a bulk density log. As explained, these can be provided as input to an ML model that can generate at least the test type prediction log as an output.

As explained, a framework can include a petro-reservoir model that can provide for depth-based predicted pressure test type flag with probabilities of each test type and optionally a predicted mobility index across depth. As explained, a framework can provide for implementation of an end-to-end workflow that incorporates various actions involved into a singular system. As an example, a system can provide for ranking variables as to impact. For example, a system may provide for assessing various types of input as to impact on output. In such an example, input may be tailored and/or one or more ML models may be tailored.

As explained, a framework can provide for time and cost savings. As an example, such a framework may provide for emissions optimization and/or emissions reduction. For example, test operations optimization according to smart planning can reduce CO2 emissions. Consider a three-month period of time where implementation of a system such as the system 700 can reduce test operations time by hundreds of hours, which can translate into reduced rig and/or wireline engine emissions (e.g., reduced consumption of diesel fuel, etc.).

As explained, a system can improve tool selection and/or tool setup and/or tool programming. For example, consider a tool that has a limited sample retention capability. In such an example, a cutoff may be utilized for success probability to select a number of test locations that corresponds to the number of samples that a tool can retain (e.g., consider 20 samples, 40 samples, etc.). As another example, consider use of mobility index to select a tool type. For example, if mobility is less than 1 mD, a tool may be selected that can handle such a mobility level (e.g., consider dual sensor tool with a sufficiently rated, strong pump).

As an example, a data science platform such as the DATAIKU platform may be utilized for one or more purposes. The DATAIKU platform provides various libraries for ML models and associated techniques. In various trials, a number of ML models of the DATAIKU platform were utilized where an optimal ML model was selected for implementation (see, e.g., results of the GUI 800 of Fig. 8). In such trials, the ML models included support vector machine (SVM), artificial neural network (ANN), decision trees, random forest and XGBoost.

XGBoost is an optimized distributed gradient boosting library designed to be highly efficient, flexible and portable. It implements machine learning algorithms under the Gradient Boosting framework. XGBoost provides a parallel tree boosting (also known as GBDT, GBM) for application to data science problems in a fast and accurate way. The same code runs on major distributed environment (Hadoop, SGE, MPI) and can solve problems beyond billions of examples. XGBoost works as Newton-Raphson in function space unlike gradient boosting that works as gradient descent in function space, a second order Taylor approximation can be used in the loss function to make the connection to Newton Raphson method.

XGBoost can optimize performance of decision trees, in a gradient boosting framework while minimizing overfitting/bias through regularization. As to hyperparameters, these can include, for example, maximum depth, learning rate and number of classes. As explained, the number of classes may depend on training data and/or task. In various examples, classes are limited to valid and invalid as to tests performed using a downhole tool. While three hyperparameters are mentioned, for XGBoost, hyperparameters may be categorized as general, booster and task parameters.

As to maximum depth, it limits how deep each tree can grow. A platform may start by using a default value where one or more other values may be utilized if overfitting is or becomes an issue. As to number of decision trees to be boosted, a parameter known as "n_estimators" can be set where, for boosting, it must be greater than 1 (e.g., consider a default value of 100). L1 and L2 regularization parameters are also available, which can make a model more conservative (e.g., by increasing value).

As an example, an ML model-based approach may utilize one or more of supervised and/or unsupervised learning. As an example, an F1 score (e.g., harmonic mean of precision and recall) can be used as a metric and/or a confusion matrix or matching matrix. In such an approach, various types of ML models may be excluded from further consideration. Once one or more ML models are selected as suitable for a task or tasks, the one or more ML models may be subjected to tuning, which can include hyperparameter tuning. In various trials, decision trees, including XGBoost, and random forest ML models demonstrated superior performance compared to SVM and ANN.

As explained, in gradient boosting, various hyperparameters can be involved. For example, consider one or more of a number of trees or estimators in a model ("n_estimators"), a learning rate of a model, a row and column sampling rate for stochastic models, a maximum tree depth, a minimum tree weight, regularization terms alpha and lambda, etc. In various instances, one or more hyperparameters may be tuned. For example, consider a process where the learning rate is set to as small as possible value followed by tuning the number of trees using cross validation. Various platforms, libraries, etc., provide default values for hyperparameters. While DATAIKU is mentioned, also consider the following SCIKIT-LEARN platform hyperparameter values:

```
      learning_rate=0.1 (shrinkage).
      n_estimators=100 (number of trees).
      max_depth=3.
      min_samples_split=2.
      min samples_leaf=1.
      subsample=1.0.
```

As an example, cross-validation can be utilized as a statistical technique to estimate skill of one or more ML models. Cross-validation can be used in applied machine learning, for example, to compare and select a model for a given predictive modeling problem because it is easy to understand, easy to implement, and results in skill estimates that generally have a lower bias than other methods. As an example, a k-fold cross-validation procedure can be implemented for estimating skill of one or more ML models.

More specifically, cross-validation is a resampling procedure that can be used to evaluate one or more ML models on a limited data sample. As to k-fold cross-validation, the parameter k that refers to the number of groups that a given data sample is to be split into (e.g., k-fold). When a specific value for k is chosen, it may be used in place of k in a reference to the model, such as k = 10 becoming 10-fold cross-validation.

As explained, cross-validation may be used in applied machine learning to estimate the skill of a ML model on unseen data. That is, to use a limited sample in order to estimate how the ML model is expected to perform in general when used to make predictions on data not used during the training of the ML model.

A k-fold approach can result in a less biased or less optimistic estimate of ML model skill than techniques such as a simple train/test split. A k-fold approach can include shuffling a dataset randomly, splitting the dataset into k groups where, for each group: (a) take the group as a hold out or test data set; (b) take the remaining groups as a training data set; (c) fit a model on the training set and evaluate it on the test set; and (d) retain the evaluation score and discard the model. In such an example, the k-fold approach can summarize the skill of the model using the sample of model evaluation scores. In such an example, each observation in the data sample can be assigned to an individual group and can stay in that group for the duration of the procedure. This means that each sample is given the opportunity to be used in the hold out set 1 time and used to train the model k-1 times. Accordingly, a k-fold approach involves randomly dividing a set of observations into k groups, or folds, of approximately equal size, where the first fold can be treated as a validation set and where fitting is performed on the remaining k - 1 folds.

As an example, a method can include using a gradient boosting model for classification along with a k-fold cross-validation approach. For example, a method that includes evaluating a gradient boosting classifier on a test problem using repeated k-fold cross-validation and reporting mean accuracy. In such an example, a single model may be fit on available data (e.g., for a particular type of reservoir, etc.) to perform classification (e.g., binary, more than two classes, etc.).

Below are examples of code for the SCIKIT-LEARN platform for gradient boosting classification and k-fold:

```
      # gradient boosting for classification in scikit-learn
      from numpy import mean, from numpy import std
      from sklearn.datasets import make_classification
      from sklearn.ensemble import GradientBoostingClassifier
      from sklearn.model_selection import cross_val_score
      from sklearn.model_selection import RepeatedStratifiedKFold
      from matplotlib import pyplot
      # define dataset
      X, y = make_classification(n_samples=1000, n_features=10, n_informative=5,
      n_redundant=5, random_state=1)
      # evaluate the model
      model = GradientBoostingClassifier()
      cv = RepeatedStratifiedKFold(n_splits=10, n_repeats=3, random_state=1)
      n_scores = cross_val_score(model, X, y, scoring='accuracy', cv=cv, n_jobs=-1,
      error_score='raise')
      print('Accuracy: %.3f (%.3f)' % (mean(n_scores), std(n_scores)))
      # fit the model on the whole dataset
      model = GradientBoostingClassifier()
      model.fit(X, y)
      # make a single prediction
      row = [[2.56999479, -0.13019997, 3.16075093, -4.35936352, -1.61271951, -
      1.39352057, -2.48924933, -1.93094078, 3.26130366, 2.05692145]]
      yhat = model.predict(row)
      print('Prediction: %d' % yhat[0])
```

As an example, a k-fold test can be implemented to assess performance (e.g., consider a value of k from approximately 5 to approximately 10) and, for example, input to a gradient boosted ML model. Tuning of such a ML model can provide for appropriate learning without overfitting or leakage (e.g., ML model memorization rather than learning).

As to use of a random forest, it can handle instances where input may be to various extents uncorrelated. As petrophysics log data can be to some extent related (e.g., some amount of cross-correlation of logs), an XGBoost approach proved sufficient in comparison to a random forest approach (e.g., using tuning and comparisons via F1, confusion/matching matrix, blind test, etc.). The XGBoost approach can handle petrophysics logs as input from a common well, which may be a new well for which tests are to be performed. As an example, petrophysics logs may be acquired by a common tool or a number of tools deployed in a well. A trained ML model can provide for log correlation between an acquired log or logs and training logs as imparted to the trained ML model and, for example, flags as to validity or invalidity.

As an example, a ML model can provide output in a relatively rapid manner, which can be in less than a few minutes, from receipt of input. As explained, a framework can improve testing operations, which, in turn, can improve testing operation results. Such results can be utilized for one or more purposes, which can include reservoir model building, reservoir flow simulation, etc. As explained, various decisions can be made based on modeling, simulation, etc., such that improved results from testing operations can improve downstream operations and decision making.

As an example, output such as the output of the GUI 800 can be utilized during testing operations. For example, if a selected location proves to be problematic during a testing operation (e.g., due to borehole damage, etc.), the location may be adjusted using one or more of the tracks of the GUI 800. For example, an adjustment to a lesser measured depth may be appropriate where a probability for a valid test is increasing in the direction of lesser measured depth or an adjustment to a greater measured depth may be appropriate where a probability for a valid test is increasing in the direction of greater measured depth. Thus, a probability curve (e.g., probability track) can be utilized to guide field operations to improve acquisition of valid tests (e.g., improved testing efficiency).

As an example, a user may utilize a GUI such as the GUI 800 for selection of locations for testing operations. For example, the user may utilize a human input device (HID) to select locations on a track where each of the locations can have associated information such as, for example, one or more of validity, probability and mobility index. In such an example, a framework may provide for appropriate spacing between locations, for example, to assure that locations are spaced by at least a predefined distance (e.g., 10 cm, 25 cm, 1 m, 10 m, etc.), which may depend on type of test and/or type of test equipment (e.g., downhole tool).

As an example, a downhole tool may include one or more processors, memory accessible by at least one of the processors and instructions stored in the memory and executable by at least one of the processors such that a ML model can be executed by the downhole tool such that the downhole tool can generate output. For example, consider a downhole tool that can acquire petrophysical logs and input them to a trained ML model executing in the downhole tool such that one or more test locations can be determined by the downhole tool.

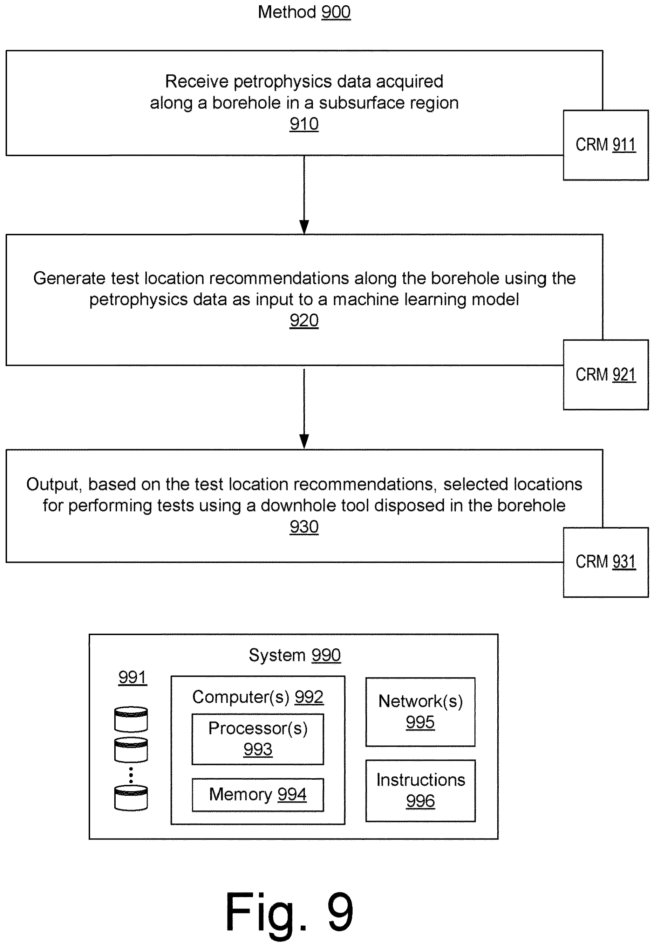

Fig. 9 shows an example of a method 900 and an example of a system 990. As shown, the method 900 can include a reception block 910 for receiving petrophysics data acquired along a borehole in a subsurface region; a generation block 920 for generating test location recommendations along the borehole using the petrophysics data as input to a machine learning model; and an output block 930 outputting, based on the test location recommendations, selected locations for performing tests using a downhole tool disposed in the borehole.

The method 900 is shown in Fig. 9 in association with various computer-readable media (CRM) blocks 911, 921 and 931. Such blocks generally include instructions suitable for execution by one or more processors (or processor cores) to instruct a computing device or system to perform one or more actions. While various blocks are shown, a single medium may be configured with instructions to allow for, at least in part, performance of various actions of the method 900. As an example, a computer-readable medium (CRM) may be a computer-readable storage medium that is non-transitory and that is not a carrier wave. As an example, one or more of the blocks 911, 921 and 931 may be in the form processor-executable instructions.

In the example of Fig. 9, the system 990 includes one or more information storage devices 991, one or more computers 992, one or more networks 995 and instructions 996. As to the one or more computers 992, each computer may include one or more processors (e.g., or processing cores) 993 and memory 994 for storing the instructions 996, for example, executable by at least one of the one or more processors 993 (see, e.g., the blocks 911, 921 and 931). As an example, a computer may include one or more network interfaces (e.g., wired or wireless), one or more graphics cards, a display interface (e.g., wired or wireless), etc.

As to types of machine learning models that may be implemented for one or more purposes, which may include event detection, consider one or more of a support vector machine (SVM) model, a k-nearest neighbors (KNN) model, an ensemble classifier model, a neural network (NN) model, etc. As an example, a machine learning model can be a deep learning model (e.g., deep Boltzmann machine, deep belief network, convolutional neural network, stacked auto-encoder, etc.), an ensemble model (e.g., random forest, gradient boosting machine, bootstrapped aggregation, AdaBoost, stacked generalization, gradient boosted regression tree, etc.), a neural network model (e.g., radial basis function network, perceptron, back-propagation, Hopfield network, etc.), a regularization model (e.g., ridge regression, least absolute shrinkage and selection operator, elastic net, least angle regression), a rule system model (e.g., cubist, one rule, zero rule, repeated incremental pruning to produce error reduction), a regression model (e.g., linear regression, ordinary least squares regression, stepwise regression, multivariate adaptive regression splines, locally estimated scatterplot smoothing, logistic regression, etc.), a Bayesian model (e.g., naive Bayes, average on-dependence estimators, Bayesian belief network, Gaussian naive Bayes, multinomial naive Bayes, Bayesian network), a decision tree model (e.g., classification and regression tree, iterative dichotomiser 3, C4.5, C5.0, chi-squared automatic interaction detection, decision stump, conditional decision tree, M5), a dimensionality reduction model (e.g., principal component analysis, partial least squares regression, Sammon mapping, multidimensional scaling, projection pursuit, principal component regression, partial least squares discriminant analysis, mixture discriminant analysis, quadratic discriminant analysis, regularized discriminant analysis, flexible discriminant analysis, linear discriminant analysis, etc.), an instance model (e.g., k-nearest neighbor, learning vector quantization, self-organizing map, locally weighted learning, etc.), a clustering model (e.g., k-means, k-medians, expectation maximization, hierarchical clustering, etc.), etc.

As an example, a machine model may be built using a computational framework with a library, a toolbox, etc., such as, for example, those of the MATLAB framework (MathWorks, Inc., Natick, Massachusetts). The MATLAB framework includes a toolbox that provides supervised and unsupervised machine learning algorithms, including support vector machines (SVMs), boosted and bagged decision trees, k-nearest neighbor (KNN), k-means, k-medoids, hierarchical clustering, Gaussian mixture models, and hidden Markov models. Another MATLAB framework toolbox is the Deep Learning Toolbox (DLT), which provides a framework for designing and implementing deep neural networks with algorithms, pretrained models, and apps. The DLT provides convolutional neural networks (ConvNets, CNNs) and long short-term memory (LSTM) networks to perform classification and regression on image, time-series, and text data. The DLT includes features to build network architectures such as generative adversarial networks (GANs) and Siamese networks using custom training loops, shared weights, and automatic differentiation. The DLT provides for model exchange to various other frameworks.

As an example, the TENSORFLOW framework (Google LLC, Mountain View, CA) may be implemented, which is an open source software library for dataflow programming that includes a symbolic math library, which can be implemented for machine learning applications that can include neural networks. As an example, the CAFFE framework may be implemented, which is a DL framework developed by Berkeley AI Research (BAIR) (University of California, Berkeley, California). As another example, consider the SCIKIT platform (e.g., scikit-learn), which utilizes the PYTHON programming language. As an example, a framework such as the APOLLO AI framework may be utilized (APOLLO.AI GmbH, Germany). As an example, a framework such as the PYTORCH framework may be utilized (Facebook AI Research Lab (FAIR), Facebook, Inc., Menlo Park, California).

As an example, a training method can include various actions that can operate on a dataset to train a ML model. As an example, a dataset can be split into training data and test data where test data can provide for evaluation. A method can include cross-validation of parameters and best parameters, which can be provided for model training.

The TENSORFLOW framework can run on multiple CPUs and GPUs (with optional CUDA (NVIDIA Corp., Santa Clara, California) and SYCL (The Khronos Group Inc., Beaverton, Oregon) extensions for general-purpose computing on graphics processing units (GPUs)). TENSORFLOW is available on 64-bit LINUX, MACOS (Apple Inc., Cupertino, California), WINDOWS (Microsoft Corp., Redmond, Washington), and mobile computing platforms including ANDROID (Google LLC, Mountain View, California) and IOS (Apple Inc.) operating system based platforms.

TENSORFLOW computations can be expressed as stateful dataflow graphs; noting that the name TENSORFLOW derives from the operations that such neural networks perform on multidimensional data arrays. Such arrays can be referred to as "tensors".

As an example, a device may utilize TENSORFLOW LITE (TFL) or another type of lightweight framework. TFL is a set of tools that enables on-device machine learning where models may run on mobile, embedded, and loT devices. TFL is optimized for on-device machine learning, by addressing latency (no round-trip to a server), privacy (no personal data leaves the device), connectivity (Internet connectivity is demanded), size (reduced model and binary size) and power consumption (e.g., efficient inference and a lack of network connections). TFL offers multiple platform support, covering ANDROID and iOS devices, embedded LINUX, and microcontrollers. TFL offers diverse language support, which includes JAVA, SWIFT, Objective-C, C++, and PYTHON. TFL offers high performance, with hardware acceleration and model optimization.

As an example, a method can include receiving petrophysics data acquired along a borehole in a subsurface region; generating test location recommendations along the borehole using the petrophysics data as input to a machine learning model; and outputting, based on the test location recommendations, selected locations for performing tests using a downhole tool disposed in the borehole. In such an example, the tests can include reservoir tests.

As an example, a machine learning model can be or include a petro-reservoir machine learning model that receives petrophysical data and outputs reservoir test location recommendations (e.g., "petro" to "reservoir").

As an example, a machine learning model can be or include a trained machine learning that is trained using datasets from clastic subsurface regions and/or a trained machine learning that is trained using datasets from carbonate subsurface regions. For example, a machine learning model can be trained using particular datasets, which may be selected based on how a type of sedimentology may impact reservoir tests. For example, a clastic sedimentology may impact reservoir tests differently than a carbonate sedimentology, which may be due in part to diagenesis. In such an example, equipment and/or equipment parameters (e.g., configurations) may differ. As explained, relative permeability, mobility, etc., may differ based on sedimentology. By classifying datasets for training based on sedimentology, a more accurate ML model may be developed for a particular sedimentology.

As an example, a method can include analyzing petrophysics data to make a determination that a subsurface region is a clastic subsurface region or a carbonate subsurface region and, based on the determination, selecting a machine learning model from a collection of machine learning models that includes a clastic subsurface region machine learning model and a carbonate subsurface region machine learning model. In such an example, a framework may automatically select an appropriate ML model, optionally without user intervention. In such an example, a downhole tool, a logging vehicle, a server, a workstation, etc., may transmit one or more petrophysical logs to the framework where, for example, the framework may automatically select an appropriate ML model and/or present one or more ML models that are deemed appropriate for generation of reservoir test location recommendations based on the one or more petrophysical logs.

As an example, tests can include reservoir pressure tests. As explained, a test or tests may be selected from various types of tests, which may include one or more types of pressure tests.

As an example, a method can include generating test location recommendations that include validity indicators with respect to measured depth along a borehole, probability of validity values with respect to measured depth along the borehole and/or mobility index values with respect to measured depth along the borehole. As an example, a method can include selecting a downhole tool based at least in part on mobility index values and/or setting one or more operational parameters of the downhole tool based at least in part on mobility index values.

As an example, a method can include generating test location recommendations in a manner that occurs responsive to receiving petrophysical data along a borehole to generate the test location recommendations along the borehole in real-time.

As an example, a method can be dynamic and can be implemented in real-time to adjust test locations (e.g., depth points) along a borehole. For example, consider running a tool in a borehole and performing tests at various locations where one or more of such locations may be adjusted per one or more real-time test location recommendations that rely on output generated by a ML model.

As an example, a method can include adjusting one or more selected locations in real-time while the downhole tool is disposed in the borehole responsive to information acquired by the downhole tool. For example, a selected location may prove to be problematic for one or more reasons during actual testing operations. In such an example, the downhole tool may acquire information (e.g., consider local information, information from other test locations, etc.), where such information may indicate that an adjustment is appropriate. For example, consider information as to a washout, an inaccuracy in a measured depth, etc., where output from a ML model may be used to guide the downhole tool to a more suitable location (e.g., an adjusted location). In such an example, probability information, mobility information, validity information, etc., may be used to make an adjustment (e.g., an adjustment in measured depth of a test location).

As an example, a machine learning model can include at least one tree structure. As an example, a machine learning model can include or be a gradient boosted machine learning model. As explained, a gradient boosted machine learning model can include or be an XGBoost machine learning model.

As an example, a method can include training a machine learning model. In such an example, the method can include tuning hyperparameters of the machine learning model. As an example, a method can include selecting a number of petrophysics data types from a group of more than 10 petrophysics data types, where the number of petrophysics data types is less than 10. For example, as explained, a machine learning workflow can include determining what types of petrophysics logs provide for accurate results as to validity and/or invalidity of test locations along a borehole. As explained, logs may be relatively continuous whereas test locations can be discrete. Various logs may provide information that characterizes rock more appropriately with respect to a particular type of test. For example, if a test is a pressure test, logs that can provide some amount of information with respect to fluid may be more suitable than others (e.g., consider deep and shallow resistivity logs as providing information germane to pressure test validity).

As an example, a system can include one or more processors; memory accessible to at least one of the one or more processors; processor-executable instructions stored in the memory and executable to instruct the system to: receive petrophysics data acquired along a borehole in a subsurface region; generate test location recommendations along the borehole using the petrophysics data as input to a machine learning model; and output, based on the test location recommendations, selected locations for performing tests using a downhole tool disposed in the borehole.

As an example, one or more computer-readable storage media can include processor-executable instructions to instruct a computing system to: receive petrophysics data acquired along a borehole in a subsurface region; generate test location recommendations along the borehole using the petrophysics data as input to a machine learning model; and output, based on the test location recommendations, selected locations for performing tests using a downhole tool disposed in the borehole.

As an example, a computer program product can include one or more computer-readable storage media that can include processor-executable instructions to instruct a computing system to perform one or more methods and/or one or more portions of a method.

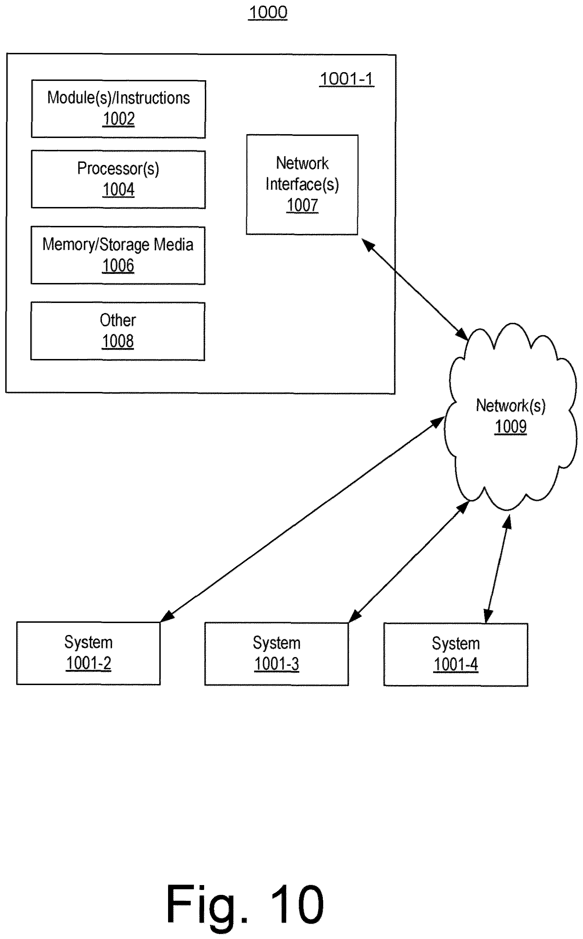

In some embodiments, a method or methods may be executed by a computing system. Fig. 10 shows an example of a system 1000 that can include one or more computing systems 1001-1, 1001-2, 1001-3 and 1001-4, which may be operatively coupled via one or more networks 1009, which may include wired and/or wireless networks.

As an example, a system can include an individual computer system or an arrangement of distributed computer systems. In the example of Fig. 10, the computer system 1001-1 can include one or more modules 1002, which may be or include processor-executable instructions, for example, executable to perform various tasks (e.g., receiving information, requesting information, processing information, simulation, outputting information, etc.).

As an example, a module may be executed independently, or in coordination with, one or more processors 1004, which is (or are) operatively coupled to one or more storage media 1006 (e.g., via wire, wirelessly, etc.). As an example, one or more of the one or more processors 1004 can be operatively coupled to at least one of one or more network interfaces 1007; noting that one or more other components 1008 may also be included. In such an example, the computer system 1001-1 can transmit and/or receive information, for example, via the one or more networks 1009 (e.g., consider one or more of the Internet, a private network, a cellular network, a satellite network, etc.).

As an example, the computer system 1001-1 may receive from and/or transmit information to one or more other devices, which may be or include, for example, one or more of the computer systems 1001-2, etc. A device may be located in a physical location that differs from that of the computer system 1001-1. As an example, a location may be, for example, a processing facility location, a data center location (e.g., server farm, etc.), a rig location, a wellsite location, a downhole location, etc.

As an example, a processor may be or include a microprocessor, microcontroller, processor module or subsystem, programmable integrated circuit, programmable gate array, or another control or computing device.

As an example, the storage media 1006 may be implemented as one or more computer-readable or machine-readable storage media. As an example, storage may be distributed within and/or across multiple internal and/or external enclosures of a computing system and/or additional computing systems.

As an example, a storage medium or storage media may include one or more different forms of memory including semiconductor memory devices such as dynamic or static random access memories (DRAMs or SRAMs), erasable and programmable read-only memories (EPROMs), electrically erasable and programmable read-only memories (EEPROMs) and flash memories, magnetic disks such as fixed, floppy and removable disks, other magnetic media including tape, optical media such as compact disks (CDs) or digital video disks (DVDs), BLUERAY disks, or other types of optical storage, or other types of storage devices.

As an example, a storage medium or media may be located in a machine running machine-readable instructions, or located at a remote site from which machine-readable instructions may be downloaded over a network for execution. As an example, various components of a system such as, for example, a computer system, may be implemented in hardware, software, or a combination of both hardware and software (e.g., including firmware), including one or more signal processing and/or application specific integrated circuits.

As an example, a system may include a processing apparatus that may be or include general purpose processors or application specific chips (e.g., or chipsets), such as ASICs, FPGAs, PLDs, or other appropriate devices.

As an example, a device may be a mobile device that includes one or more network interfaces for communication of information. For example, a mobile device may include a wireless network interface (e.g., operable via IEEE 802.11, ETSI GSM, BLUETOOTH, satellite, etc.). As an example, a mobile device may include components such as a main processor, memory, a display, display graphics circuitry (e.g., optionally including touch and gesture circuitry), a SIM slot, audio/video circuitry, motion processing circuitry (e.g., accelerometer, gyroscope), wireless LAN circuitry, smart card circuitry, transmitter circuitry, GPS circuitry, and a battery. As an example, a mobile device may be configured as a cell phone, a tablet, etc. As an example, a method may be implemented (e.g., wholly or in part) using a mobile device. As an example, a system may include one or more mobile devices.

As an example, a system may be a distributed environment, for example, a so-called "cloud" environment where various devices, components, etc. interact for purposes of data storage, communications, computing, etc. As an example, a device or a system may include one or more components for communication of information via one or more of the Internet (e.g., where communication occurs via one or more Internet protocols), a cellular network, a satellite network, etc. As an example, a method may be implemented in a distributed environment (e.g., wholly or in part as a cloud-based service).

As an example, information may be input from a display (e.g., consider a touchscreen), output to a display or both. As an example, information may be output to a projector, a laser device, a printer, etc. such that the information may be viewed. As an example, information may be output stereographically or holographically. As to a printer, consider a 2D or a 3D printer. As an example, a 3D printer may include one or more substances that can be output to construct a 3D object. For example, data may be provided to a 3D printer to construct a 3D representation of a subterranean formation. As an example, layers may be constructed in 3D (e.g., horizons, etc.), geobodies constructed in 3D, etc. As an example, holes, fractures, etc., may be constructed in 3D (e.g., as positive structures, as negative structures, etc.).

Although only a few example embodiments have been described in detail above, those skilled in the art will readily appreciate that many modifications are possible in the example embodiments. Accordingly, all such modifications are intended to be included within the scope of this disclosure as defined in the following claims. In the claims, means-plus-function clauses are intended to cover the structures described herein as performing the recited function and not only structural equivalents, but also equivalent structures. Thus, although a nail and a screw may not be structural equivalents in that a nail employs a cylindrical surface to secure wooden parts together, whereas a screw employs a helical surface, in the environment of fastening wooden parts, a nail and a screw may be equivalent structures.

## Claims

1. A method comprising:
receiving petrophysics data acquired along a borehole in a subsurface region;
generating test location recommendations along the borehole using the petrophysics data as input to a machine learning model; and
outputting, based on the test location recommendations, selected locations for performing tests using a downhole tool disposed in the borehole.

2. The method of claim 1, wherein the tests comprise reservoir tests.

3. The method of claim 1 or 2, wherein the machine learning model comprises a petro-reservoir machine learning model that receives the petrophysical data and outputs reservoir test location recommendations.

4. The method of any one of the preceding claims, wherein the machine learning model comprises a trained machine learning that is trained using datasets from clastic and/or carbonate subsurface regions.

5. The method of any one of the preceding claims, comprising analyzing the petrophysics data to make a determination that the subsurface region is a clastic subsurface region or a carbonate subsurface region and, based on the determination, selecting the machine learning model from a collection of machine learning models that comprises a clastic subsurface region machine learning model and a carbonate subsurface region machine learning model.

6. The method of any one of the preceding claims, wherein the tests comprise reservoir pressure tests.

7. The method of any one of the preceding claims, wherein the test location recommendations comprise validity indicators with respect to measured depth along the borehole.

8. The method of any one of the preceding claims, wherein the test location recommendations comprise probability of validity values with respect to measured depth along the borehole.

9. The method of any one of the preceding claims, wherein the test location recommendations comprise mobility index values with respect to measured depth along the borehole, preferably comprising selecting the downhole tool based at least in part on the mobility index values and/or setting one or more operational parameters of the downhole tool based at least in part on the mobility index values.

10. The method of any one of the preceding claims, comprising adjusting one or more of the selected locations in real-time while the downhole tool is disposed in the borehole responsive to information acquired by the downhole tool.

11. The method of any one of the preceding claims, wherein the machine learning model comprises at least one tree structure and/or comprises a gradient boosted machine learning model, wherein the gradient boosted machine learning model preferably comprises an XGBoost machine learning model.

12. The method of any one of the preceding claims, comprising training the machine learning model.

13. The method of claim 12, comprising tuning hyperparameters of the machine learning model and/or comprising selecting a number of petrophysics data types from a group of more than 10 petrophysics data types, wherein the number of petrophysics data types is less than 10.

14. A system comprising:
one or more processors;
memory accessible to at least one of the one or more processors;
processor-executable instructions stored in the memory and executable to instruct the system to perform the method according to any one of the preceding claims.

15. One or more computer-readable storage media comprising processor-executable instructions to instruct a computing system to perform the method according to any one of the preceding claims 1 - 13.
